(19) **Europäisches Patentamt**

**European Patent Office**

**Office européen des brevets**

(11) **EP 0 569 984 B1**

(12) **EUROPEAN PATENT SPECIFICATION**

(45) Date of publication and mention
of the grant of the patent:
**30.07.1997 Bulletin 1997/31**

(51) Int. Cl.$^6$: **B60S 3/00**, B08B 3/02,
G05D 1/02, A47L 11/40

(21) Application number: **93107807.5**

(22) Date of filing: **13.05.1993**

(54) **Automatic railroad passenger car cleaning robot**

Roboter zum Reinigen eines Reisezugwagens

Robot de nettoyage pour voiture ferroviaire

(84) Designated Contracting States:
**DE FR GB IT**

(30) Priority: **15.05.1992 JP 123271/92**
**15.05.1992 JP 123276/92**
**15.05.1992 JP 123267/92**

(43) Date of publication of application:
**18.11.1993 Bulletin 1993/46**

(73) Proprietor: **KABUSHIKI KAISHA TOSHIBA**
**Kawasaki-shi, Kanagawa-ken 210 (JP)**

(72) Inventors:
• **Ohshida, Masaki**
**Mitoshi, Ibaragiken (JP)**
• **Fujiwara, Yoshimori**
**Tokyo (JP)**

• **Mizuno, Sueyoshi**
**Yokohamashi, Kanagawaken (JP)**
• **Iba, Satoshi**
**Tokyo (JP)**
• **Okamoto, Seiichi**
**Tokyo (JP)**

(74) Representative: **Lehn, Werner, Dipl.-Ing. et al**
**Hoffmann, Eitle & Partner,**
**Patentanwälte,**
**Postfach 81 04 20**
**81904 München (DE)**

(56) References cited:
**EP-A- 0 402 764**    **EP-A- 0 424 229**
**WO-A-88/07711**    **US-A- 5 001 635**

**Description**

BACKGROUND OF THE INVENTION

Field of the Invention

The present invention relates to a railroad passenger car cleaning robot according to the preamble of claim 1. A robot of this kind is known from EP-A-0 402 764.

Description of the Background Art

Conventionally, a cleaning of floors of a railroad passenger car has been handled by a human labor.

However, such a human labor requires a considerably hard labor for the workers to handle a large number of railroad passenger cars, and such a hard labor in turn requires a high labor cost.

In view of such a circumstance, there has been a strong demand for a cleaning robot for wash cleaning the floor of the railroad passenger car with wash cleaning equipments while running along the seats, doors, and walls of the railroad passenger car automatically.

Here, such a cleaning robot will be required to deal with different types of railroad passenger cars having different interior configurations, such as a front end passenger car having a driver's room at its front end, and a middle passenger car with seats provided all the way up to its front and rear ends. Consequently, it is necessary for the cleaning robot to be capable of taking an appropriate running route for each one of the railroad passenger cars of different types to be dealt with.

When a number of types of the railroad passenger cars to be dealt with is not so many, it is possible to set up the appropriate running route for each type of railroad passenger car in advance such that any one of the predetermined running routes for different types of railroad passenger cars can be selected by a human supervisor according to the type of the railroad passenger car.

However, the number of middle passenger cars are overwhelmingly greater than the number of front end passenger cars in practice so that the switching between the running route for the middle passenger car and the running route for the front end passenger car can easily be forgotten by the human supervisor when the front end passenger car is to be cleaned after the cleaning of a large number of middle passenger cars.

In addition, in a case of using the predetermined running route, the cleaning robot must be placed at a predetermined starting position in each railroad passenger car such as a rear left end position, before the wash cleaning operation is started. As a consequence, when the wash cleaning operation by the cleaning robot is stopped for some reason before its completion, the cleaning robot must be brought back to the predetermined starting position and the entire cleaning operation must be carried out again from the beginning so that it can be quite wasteful.

Moreover, the level of contamination can vary from one railroad passenger car to another, and from one spot to another in any railroad passenger car, so that in order to achieve the uniform finish for every railroad passenger car, it is desirable for the cleaning robot to carry out more intensive wash cleaning at more heavily contaminated spot according to the level of contamination at each spot automatically.

Now, in a case such a cleaning robot is to be equipped with a distance measurement sensor for determining the position relative to the interior configuration of the railroad passenger car, the interior configuration of a typical railroad passenger car has various complications for the distance measurement sensor such as a difference between the door and the door box, a difference between the door and the handrail on the door box, a seam portion between adjacent seats, and a seam portion between a seat and a seat frame, etc., so that it can often be difficult for the distance measurement sensor to follow all the minute changes due to these complications closely.

In addition, the distance measurement sensor has a limited directivity of about ± 5° characteristically, so that the distance measurement becomes either impossible or erroneous when the reflection targets are oblique as in the case of the seam portions.

Now, such a cleaning robot is equipped with the power supply cable for supplying an operation power from an external power source to the robot, and it is necessary to avoid the power supply cable from slacking down onto the floor and tangling with the robot.

To this end, conventionally, the slacking of the power supply cable is detected by using a micro-switch, and the rewinding device is activated by a driving motor according to the output of the micro-switch to wind up the slacking part of the power supply cable. On the other hand, when there is a need to roll out the power supply cable, the rewinding device is disconnected from the driving motor such that the power supply cable can be rolled out freely in accordance with the movement of the robot away from the external power source.

Such a conventional configuration for the cable winding control has a simple structure, but there are cases in which such a conventional configuration is insufficient.

Namely, when the robot moves at a high speed, due to the friction involved in the operation for rolling out the power supply cable, the rolling out of the power supply cable may not be able to keep up with the pace at which the robot moves away from the external power source, such that the tension exerted on the power supply cable can be excessive to the point of breaking the power supply cable.

Also, in a case of using the micro-switch, the micro-switch may not be able to detect the slacking of the power supply cable when the power supply cable is very thin and light, so that it may not necessarily be possible to make the desired cable winding control in such a case.

From WO-A-8807711 a control system for a cleaning robot including sensors on the sides of the robot is known.

## SUMMARY OF THE INVENTION

It is therefore a primary object of the present invention to provide a railroad passenger car cleaning robot capable of carrying out the wash cleaning operation automatically, and

capable of improving the efficiency of the wash cleaning oeration automatically.

This object is solved as characterized in claim 1. Advantageous embodiments are defined in the dependent claims. The robot of the present invention comprises: dirty water collection means for collecting dirty water resulting from the wash cleaning operation executed by the cleaning means; water analysis sensor means for detecting a light transmission rate through the dirty water collected by the dirty water collection means; and cleaning control means for controlling the wash cleaning operation executed by the cleaning means according to the light transmission rate detected by the water analysis sensor means.

The running control means of the robot of the present invention may further include : position deviation determination means for determining a deviation of a current position of the robot from a desired position on the continuous running pattern; and steering correction factor calculation means for calculating a steering correction factor according to a size of the deviation determined by the position deviation determination means and supplying the calculated steering correction factor to the driving means such that the driving means executes a steering correction corresponding to the steering correction factor supplied from the steering correction factor calculation means.

The robot of the present invention may further comprise : cable winding means for winding a power supply cable for supplying an operation power to the robot; cable tension detection means for detecting a tension on the power supply cable; and winding control means for controlling a direction and an amount of winding of the power supply cable by the cable winding means according to the tension detected by the cable tension detection means.

A railroad passenger car cleaning robot of the invention may comprise: driving means for executing a running operation on a floor of a railroad passenger car; running control means for controlling the driving means to realize the running operation along a continuous running pattern; and cleaning means for executing a wash cleaning operation on the floor of the railroad passenger car; characterized by further comprising: distance measurement sensor means for measuring distances of the robot with respect to any one of a seat portion, a door portion, and a wall of the railroad passenger car, in front of and on one side of the robot; and proximity sensor means for detecting a presence of the seat portion of the railroad passenger car on said one side of the robot; wherein the running control means controls the driving means according to the distances measured by the distance measurement sensor means and the presence of the seat portion detected by the proximity sensor means.

The invention provides a railroad passenger car cleaning robot capable of dealing with the spot to spot variation of the level of contamination and achieving the uniform finish automatically,

capable of carrying out the optimal steering control according to a relative distance with respect to the interior configuration of the railroad passenger car, capable of being unaffected by the minute complications involved in the interior configuration of the railroad passenger cabin,

capable of maintaining a constant tension on a power supply cable by appropriately controlling a winding of the power supply cable in accordance with the movement of the robot, and

capable of keeping the power supply cable to extend toward the external power source regardless of the orientation of the robot, by appropriately controlling a winding of the power supply cable in accordance with the movement of the robot.

Other features and advantages of the present invention will become apparent from the following description taken in conjunction with the accompanying drawings.

## BRIEF DESCRIPTION OF THE DRAWINGS

Figs. 1A and 1B are a front view and a side view, respectively, of one embodiment of a railroad passenger car cleaning robot according to the present invention.

Fig. 2 is an enlarged view of a control panel on the railroad passenger car cleaning robot of Figs. 1A and 1B.

Fig. 3 is a block diagram of a detailed circuit configuration of the railroad passenger car cleaning robot of Figs. 1A and 1B.

Fig. 4 is top plan view of the railroad passenger car to be cleaned, indicating a continuous running pattern for the running operation to be executed by the railroad passenger car cleaning robot of Figs. 1A and 1B, for a case of a middle passenger car.

Fig. 5 is top plan view of the railroad passenger car to be cleaned, indicating a continuous running pattern for the running operation to be executed by the railroad passenger car cleaning robot of Figs. 1A and 1B, for a case of a front end passenger car.

Fig. 6 is an enlarged top plan view of a door portion of the railroad passenger car to be cleaned, indicating a door block running pattern to be used by the railroad passenger car cleaning robot of Figs. 1A and 1B.

Fig. 7 is an enlarged top plan view of a front end portion of the railroad passenger car to be cleaned, indicating a first round U-turn block running pattern to be used by the railroad passenger car cleaning robot of Figs. 1A and 1B, for a case of a middle passenger car.

Fig. 8 is an enlarged top plan view of a front end portion of the railroad passenger car to be cleaned, indicating a first round U-turn block running pattern to be used by the railroad passenger car cleaning robot of Figs. 1A and 1B, for a case of a front end passenger car.

Fig. 9 is an enlarged top plan view of a rear end portion of the railroad passenger car to be cleaned, indicating a first round to second round U-turn block running pattern to be used by the railroad passenger car cleaning robot of Figs. 1A and 1B.

Fig. 10 is a flow chart for the running operation to be executed by the railroad passenger car cleaning robot of Figs. 1A and 1B.

Fig. 11 is a front view of the railroad passenger car cleaning robot of Figs. 1A and 1B in a state of running along a seat portion of the railroad passenger car to be cleaned.

Fig. 12A is an enlarged top plan view of a front end portion of the railroad passenger car to be cleaned, indicating a manner of recognizing a car type as a middle passenger car by the railroad passenger car cleaning robot of Figs. 1A and 1B.

Fig. 12B is an enlarged top plan view of a front end portion of the railroad passenger car to be cleaned, indicating a manner of recognizing a car type as a front end passenger car by the railroad passenger car cleaning robot of Figs. 1A and 1B.

Fig. 13 is a top plan view of a floor of the railroad passenger car to be cleaned, indicating blocks dividing the entire floor which are to be utilized by the railroad passenger car cleaning robot of Figs. 1A and 1B.

Fig. 14 is a perspective view of a configuration of a water analysis sensor in the railroad passenger car cleaning robot of Figs. 1A and 1B.

Fig. 15 is a schematic block diagram of a detailed configuration of a running controller in the railroad passenger car cleaning robot of Figs. 1A and 1B.

Fig. 16 is a partial enlarged top plan view of the railroad passenger car to be cleaned, for explaining complications involved in the interior configuration of the railroad passenger car.

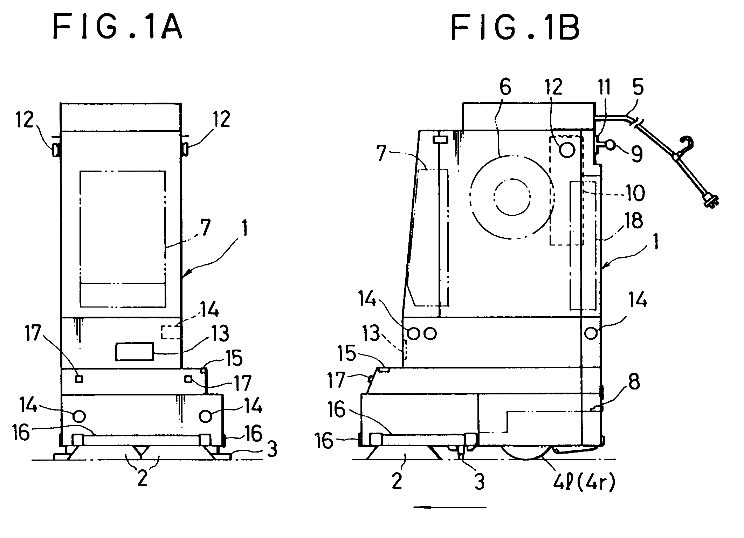

Fig, 17 is a graph of a steering factor versus a deviation to be used for the steering control in the railroad passenger car cleaning robot of Figs. 1A and 1B.

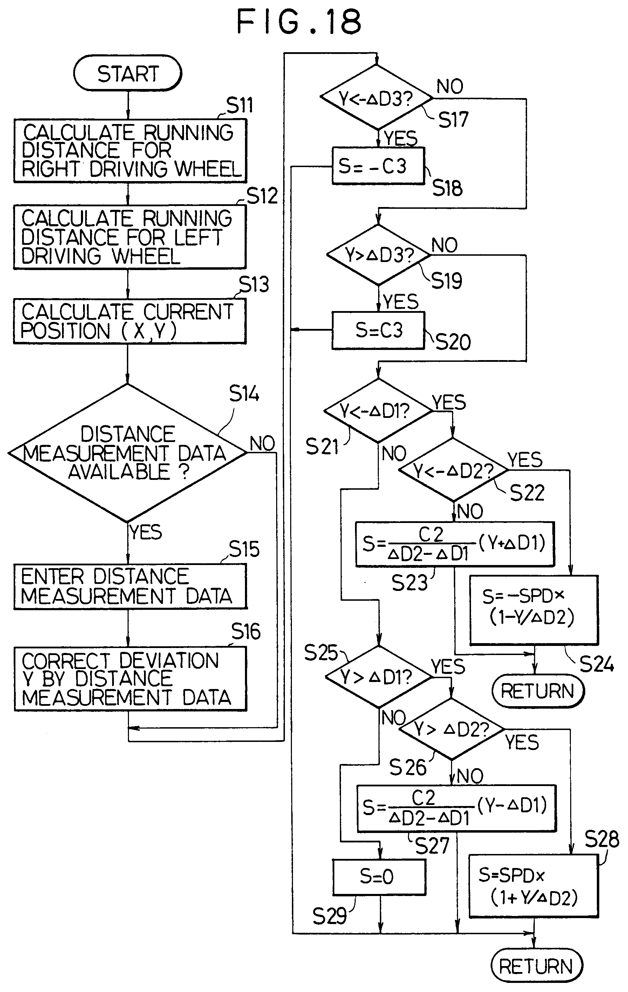

Fig. 18 is a flow chart for the steering control to be executed by the railroad passenger car cleaning robot of Figs. 1A and 1B.

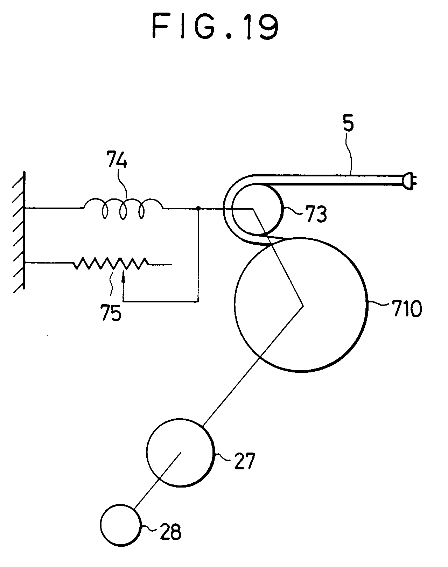

Fig. 19 is a schematic diagram of a configuration of a cable tension control section in the railroad passenger car cleaning robot of Figs. 1A and 1B.

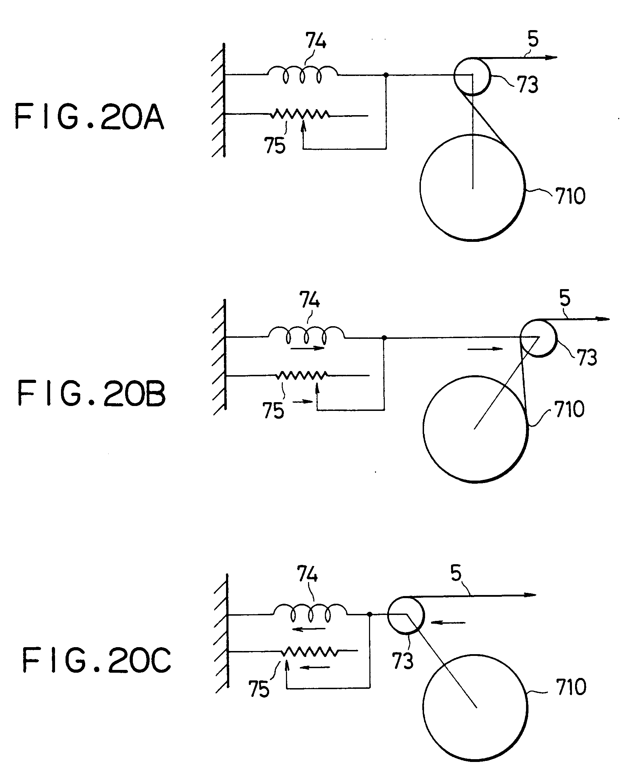

Fig. 20A is a schematic diagram of the cable tension control section in the railroad passenger car cleaning robot of Figs. 1A and 1B, in an initial state.

Fig. 20B is a schematic diagram of the cable tension control section in the railroad passenger car cleaning robot of Figs. 1A and 1B, in a state of rolling out power supply cable.

Fig. 20C is a schematic diagram of the cable tension control section in the railroad passenger car cleaning robot of Figs. 1A and 1B, in a state of rewinding power supply cable.

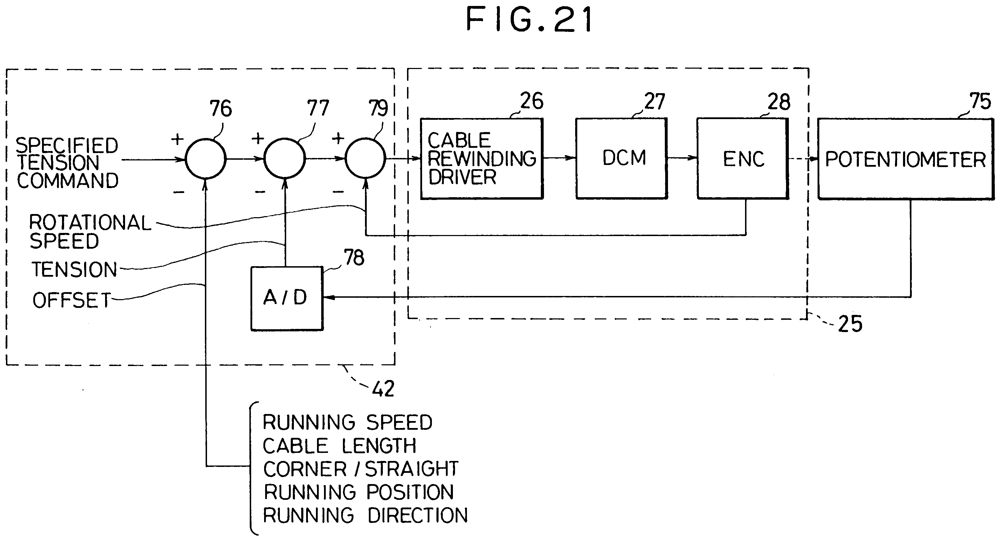

Fig. 21 is a schematic diagram for a configuration of a rewinding controller and a cable tension control section in the railroad passenger car cleaning robot of Figs. 1A and 1B.

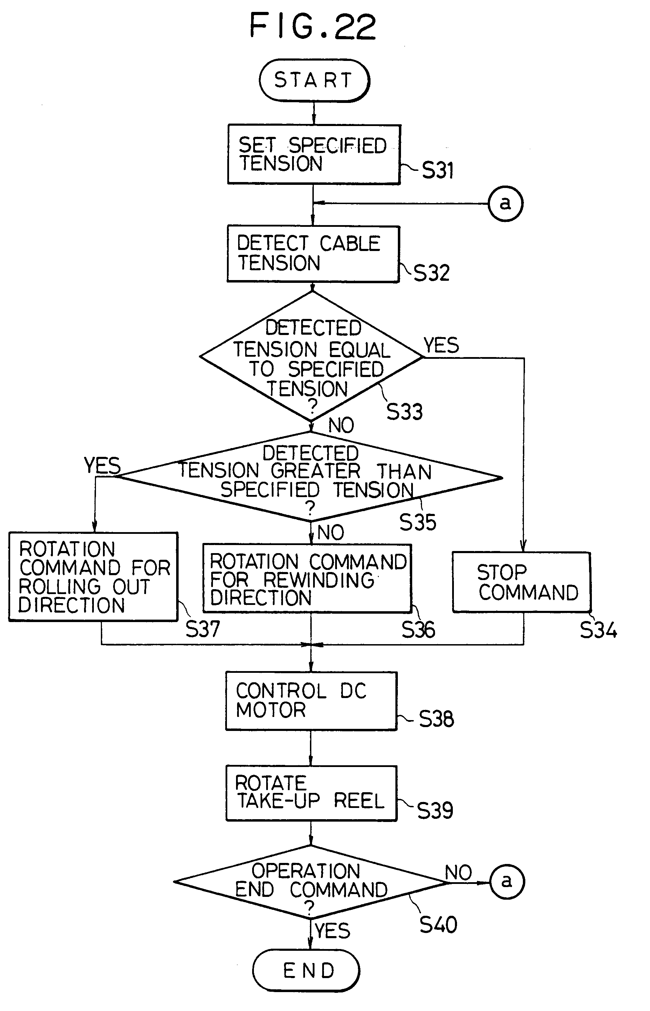

Fig. 22 is a flow chart for a cable tension control operation to be executed by the railroad passenger car cleaning robot of Figs. 1A and 1B.

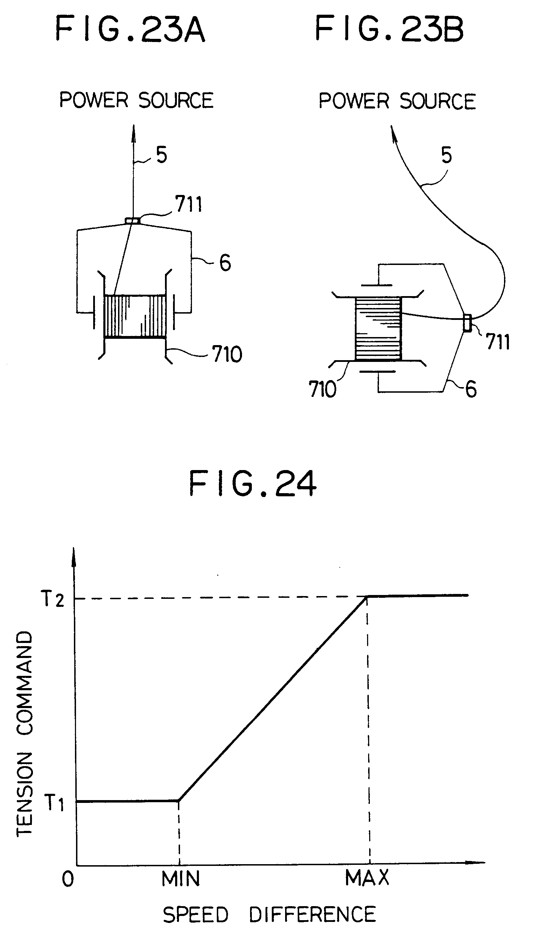

Fig. 23A is a schematic diagram showing an orientation of a cable outlet in the railroad passenger car cleaning robot of Figs. 1A and 1B, for a case of straight running.

Fig. 23B is a schematic diagram showing an orientation of a cable outlet in the railroad passenger car cleaning robot of Figs. 1A and 1B, for a case of corner running.

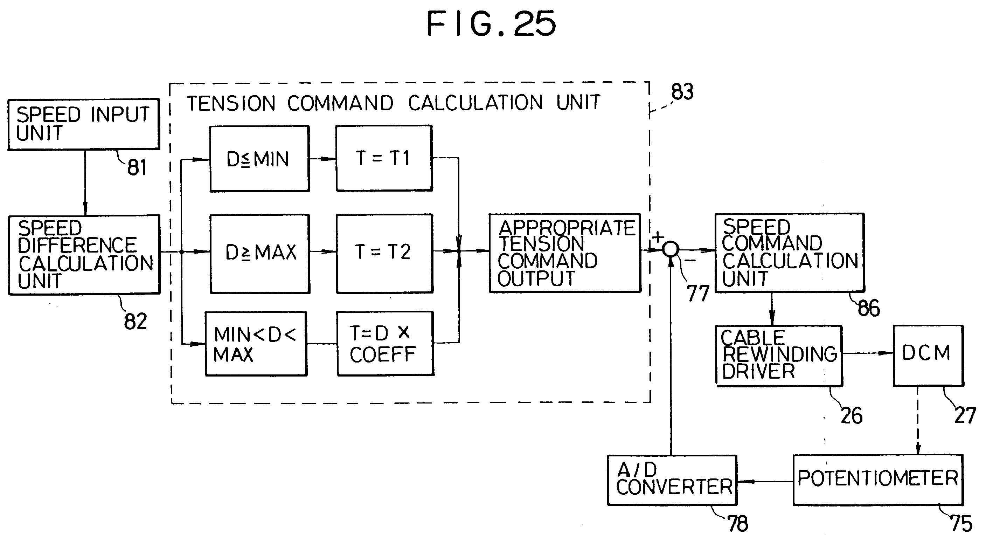

Fig. 24 is a graph of a tension command value versus a speed difference to be used for the cable tension control in the railroad passenger car cleaning robot of Figs. 1A and 1B.

Fig. 25 is a block diagram of a rewinding controller in the railroad passenger car cleaning robot of Figs. 1A and 1B.

## DETAILED DESCRIPTION OF THE PREFERRED EMBODIMENTS

Now, one embodiment of a railroad passenger car cleaning robot according to the present invention will be described in detail with references to the drawings.

ROBOT CONFIGURATION

As shown in Figs. 1A and 1B, in this embodiment, a robot body 1 of the railroad passenger car cleaning robot comprises: washing brushes 2 for carrying out the wash cleaning, which are located on a lower front portion of the robot body 1; a squeegee 2 for wiping up dirty water resulting from the wash cleaning, which is located on a lower portion of the robot body 1 behind the washing brushes 2; left and right driving wheels $4\ell$ and 4r for driving the robot body 1 along the floor, which are located on a lower rear portion of the robot body 1; a cable rewind device 6 for rewinding a power supply cable 5 to be connected to a power supply, which is located inside the robot body 1 to rewind the power supply cable 5 extending from an upper rear portion of the robot body 1; a cleanser tank 7 for containing cleanser to be used in the wash cleaning, which is located inside a front side of the robot body 1; a dirty water tank 8 for containing the dirty water sucked up by the squeegee 2, which is located inside a lower rear side of the robot body 1; and a handrail 9 to be held and pushed by an operator in a case of manually operating this robot, which is located on an upper rear portion of the robot body 1.

In addition, the robot body 1 further comprises: a control panel 10 for allowing an operator to set up an operation mode and specify a start and a stop of the operation of this robot, which is located on a right side portion of the robot body 1; a running control switch 11 for allowing an operator to specify a direction of running of this robot in a case of manually operating this robot, which is located in a vicinity of the handrail 9; and emergency stop switches 12 for allowing an operator to specify an emergency stop of the operation of this robot, which are located on both side portions of the robot body 1.

Furthermore, the robot body 1 further comprises: an obstacle sensor 13 of an ultrasonic wave type or an infrared ray type for detecting a presence of an obstacle in front of the robot body 1 during the automatic cleaning operation, which is located on a front portion of the robot body 1; a plurality of ultrasonic wave type distance measurement sensors 14 for measuring distances with respect to seats, doors, and walls in the railroad passenger car to be cleaned during the automatic cleaning operation, which are located on a front portion and a left side portion of the robot body 1; a proximity sensor 15 of an ultrasonic wave type or an infrared ray type, for detecting a presence of a seat on a left side of the robot body 1, which is located at a front end of a left side portion of the robot body 1; bumpers 16 equipped with microswitches for detecting a direct contact of the robot body 1 with the external objects such as seats and walls of the railroad passenger car, which are located on lower ends of a front portion and a left side portion of the robot body 1; direction indicators 17 for indicating a direction of the motion of the robot body 1, which are located on a front portion of the robot body 1; and a control device 18 for controlling the elements described above to carry out the running, steering, and cleaning by the robot body 1 according to the data obtained by the obstacle sensor 13, the distance measurement sensors 14, the proximity sensor 15, and the micro-switches of the bumpers 16, which is located inside a rear side of the robot body 1.

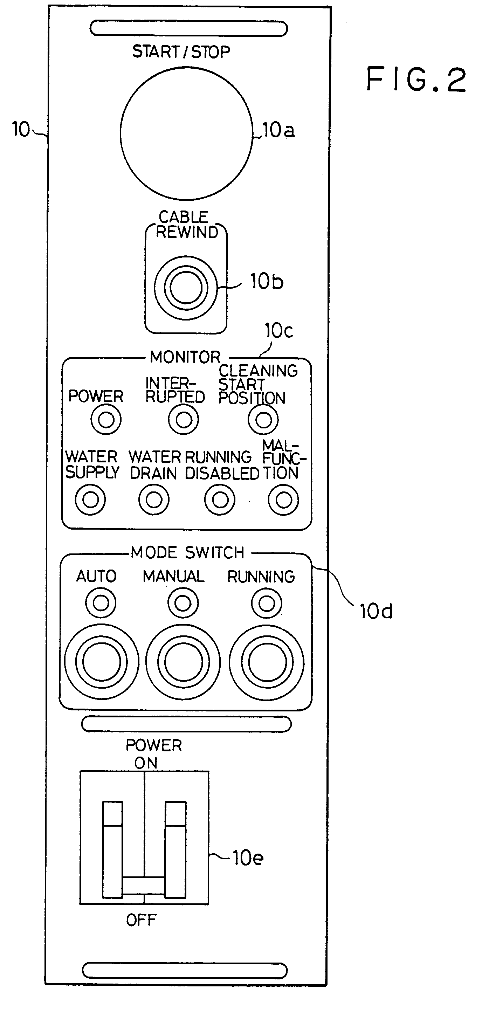

As shown in detail in Fig. 2, the control panel 10 has various switches and indicators necessary for the operator to control this robot, including: a start/stop button 10a; a cable rewind switch 10b; a monitor 10c having indicators for states of a power, a cleaning operation, and a running operation of this robot; a mode switch 10d having switches for an automatic operation mode, a manual operation mode, and a running operation mode; and a power switch 10e.

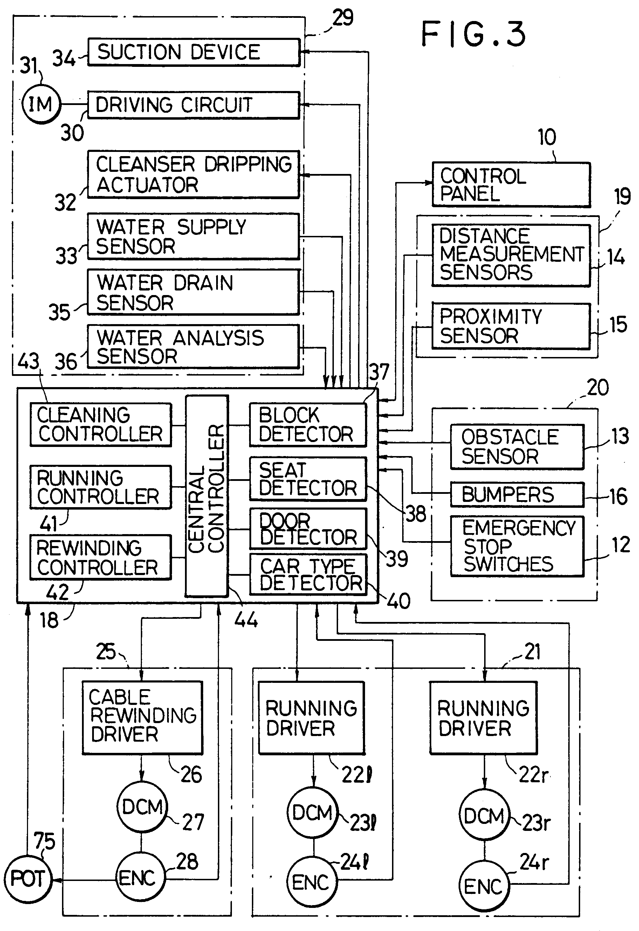

The railroad passenger car cleaning robot of this embodiment also has a detailed circuit configuration as shown in Fig. 3.

Namely, the control device 18 is formed from a microcomputer, memories, and input and output circuits, which carries out the various control functions according to the predetermined programs stored in a ROM (not shown), so as to realize the desired running speed control, running control including steering control, cleaning control, and cable rewinding control in this robot as will be described in detail below.

Here, the control signals corresponding to the start/stop command, cable rewind command, and mode switch command entered from the control panel 10 are given to the control device 18 as input data.

Also, the distance measurement sensors 14 and the proximity sensor 15 form a position data input section 19, from which the distance measurement data and the proximity detection data are given to the control device as input data.

Also, the obstacle sensor 13, the bumpers 16, and the emergency stop switches 12 form a safety section 20, from which the obstacle detection data, the contact detection data, and the emergency stop data are given to the control device 18 as input data.

In addition, there is also provided a running driver section 21 which includes: DC motors (DCM) $23\ell$ and 23r such as servo motors connected with the left and right driving wheels $4\ell$ and 4r; running drivers $22\ell$ and 22r for driving the DC motors $23\ell$ and 23r; and encoders (ENC) $24\ell$ and 24r for detecting the rotational speeds of the DC motors $23\ell$ and 23r; where the rotational speeds detected by the encoders $24\ell$ and 24r are given to the control device 18 as input data while the running drivers 22ℓ and 22r are controlled by the control device 18.

In addition, there is also provided a cable tension control section 25 which includes: a DC motor (DCM) 27 connected with the cable rewind device 6; a cable rewinding driver 26 for driving the DC motor 27; and an encoder (ENC) 28 for detecting a speed of the DC motor 27; where the speed detected by the encoder 28 is given to the control device 18 as input data while the cable rewinding driver 26 is controlled by the control device 18. Moreover, the speed detected by the encoder 28 is also given to a potentiometer 75 to be described below, and the output of the potentiometer 75 is also given to the control device 18 as input data.

In addition, there is also provided a cleaning control section 29 which includes: an induction motor (IM) 31 connected with the washing brushes 2; a driving circuit 30 for driving the induction motor (IM) 31; a cleanser dripping actuator 32 for dripping the cleanser contained in the cleanser tank 7 to the floor to be cleaned; a suction device 34 for sucking the dirty water wiped up from the floor by the squeegee 3 to the dirty water tank 8; a water supply sensor 33 for detecting a need for the supply of water to the cleanser tank 7 according to the lowering of the level of the cleanser in the cleanser tank 7; a water drain sensor 35 for detecting a need for the drainage of the dirty water from the dirty water tank 8 according to the rising of the level of the dirty water in the dirty water tank 8; and a water analysis sensor 36 for analyzing a level of pollution of the dirty water sucked up by the suction device 34 according to a light transmission level through the dirty water; where the water supply demand data, the water drainage demand data, and the water pollution level data obtained by the water supply sensor 33, the water drain sensor 35, and the water analysis sensor 36 are given to the control device 18 as input data, while the driving circuit 30, the cleanser dripping actuator 32, and the suction device 34 are controlled by the control device 18.

In order to carry out the appropriate control of the running driver section 21, the cable tension control section 25, and the cleaning control section 29, the control device 18 includes: a block detector 37, a seat detector 38, a door detector 39, a car type detector 40, a running controller 41, a rewinding controller 42, and a cleaning controller 43, all of which are controlled by a central controller 44, so as to realize the desired running speed control, running control including steering control, cleaning control, and cable rewinding control in this robot as will be described in detail below.

It is to be noted that the distance measurement sensors 14 used in this embodiment may not necessarily be the ultrasonic wave type as described above, and can be any type of sensor that can be utilized in measuring the distance, such as the optical type sensor and the contact type sensor.

RUNNING PATTERN FOR WASH CLEANING OPERATION

Now, the running pattern to be realized by the railroad passenger car cleaning robot of this embodiment in carrying out the wash cleaning operation on the railroad passenger car will be described in detail.

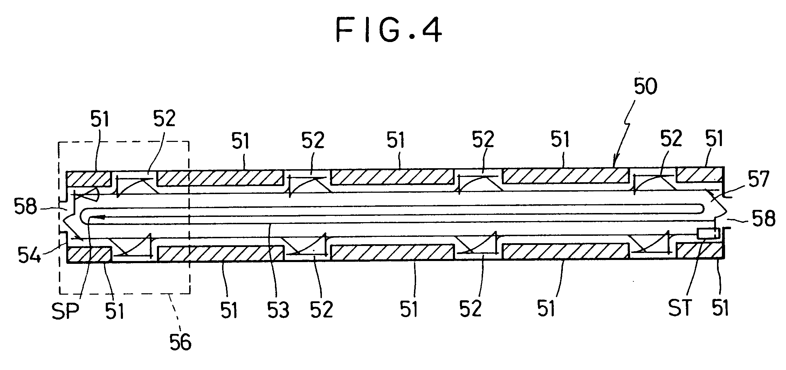

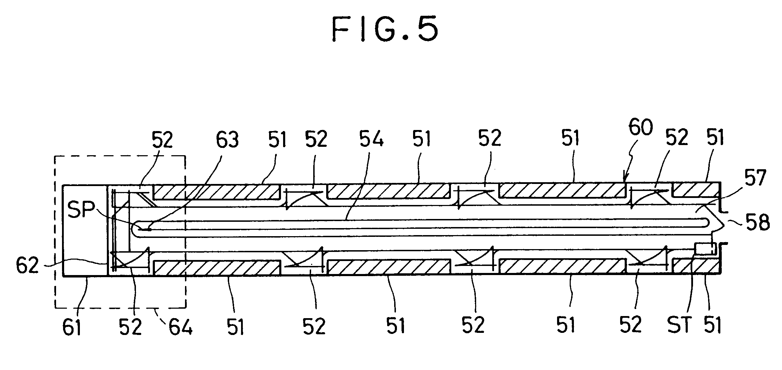

In this embodiment, the railroad passenger cars to be cleaned fall into two types including: a middle passenger car 50 as shown in Fig. 4 in which seat portions 51 are provided on both of the left and right sides along the length direction, all the way up to the wall 54 at its front end, from its rear end, with several breaks therebetween due to door portions 52; and a front end passenger car 60 as shown in Fig. 5 in which a driver's room 61 is provided at its front end, so that the seat portions 51 are provided on both of the left and right sides along the length direction, all the way down to its rear end, only from its foremost door portion 52, with several breaks therebetween due to door portions 52, and no seat provided between the wall 62 of the driver's room and the foremost door portion 52.

Thus, the railroad passenger car cleaning robot of this embodiment carries out the floor wash cleaning operation while running along a continuous route 53 shown in Fig. 4 in a case of the middle passenger car 50 or along a continuous route 63 shown in Fig. 5 in a case of the front end passenger car 60.

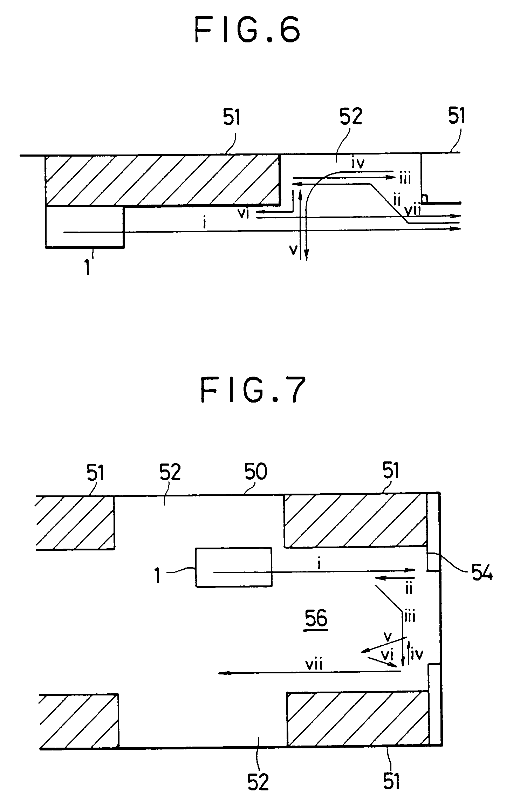

In outline, the floor wash cleaning operation starts from a start position ST located at a left rear corner position of the floor of the railroad passenger car 50 or 60, and progresses as the robot runs straight along the seat portion 51 on the left side of the railroad passenger car. Then, when the robot passes the left rearmost seat portion 51 and runs into the left rearmost door portion 52, the wash cleaning operation is continued while the robot moves in a door block running pattern shown in Fig. 6, as will be described in detail below. After the wash cleaning of the door portion 52 is completed, the wash cleaning operation is continued as the robot runs straight along the next seat portion 51. These wash cleaning operations of the seat portion 51 and the door portion 52 are repeated for all the remaining seat portion 51 and door portion 52 on the left side until the robot reaches to a front end portion of the railroad passenger car.

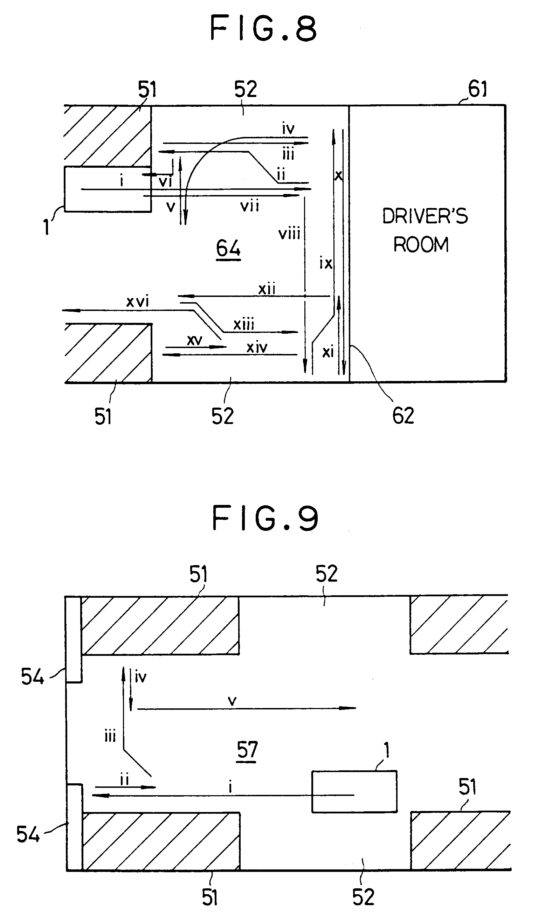

Then, whether it is the middle passenger car 50 or the front end passenger car 60 is determined in a manner to be described in detail below, and according to the type of the passenger car determined, the wash cleaning operation is continued while the robot moves in either one of the first round U-turn block running patterns shown in Fig. 7 and Fig. 8 for the middle passenger car 50 and the front end passenger car 60, respectively, within front U-turn blocks 56 and 64 indicated by dashed line enclosures in Figs. 4 and 5, as will be described in detail below.

Then, the wash cleaning operation of the right side of the railroad passenger car is carried out in the manner similar to that for the wash cleaning of the left side as described above, until the robot reaches to a right rear corner position of the floor of the railroad passenger car.

Then, the wash cleaning operation is continued while the robot moves in a first round to second round U-turn block running pattern shown in Fig. 9, within a rear U-turn block 57 shown in Figs. 4 and 5, which places the robot at a rear end position shifted by a single sweeping width from the left rear corner position toward right, as will be described in detail below. Here, the first round to second round U-turn block running pattern is identical for both the middle passenger car 50 and the front end passenger car 60 as the rear end portions of the middle passenger car 50 and the front end passenger car 60 are identical.

Finally, the wash cleaning operation is continued as the robot runs straight all the way up to the front end, makes U-turn at the front end, runs straight all the way down to the rear end, and shifts the position at the rear end by a single sweeping width toward right, and so on, until the wash cleaning operation of the entire floor is completed at a stop position SP located at a central front end position of the interior of the railroad passenger car 50 or 60. Here, the stop position SP is located at the front end, in contrast to the start position ST which is located at the rear end, such that after the wash cleaning of one railroad passenger car is finished, the robot can be moved easily from the stop position SP of that one railroad passenger car just cleaned to the starting position ST in a next railroad passenger car through a connection portion 58 of the railroad passenger cars, so as to improve the efficiency of the cleaning operations through a number of railroad passenger cars connected in series.

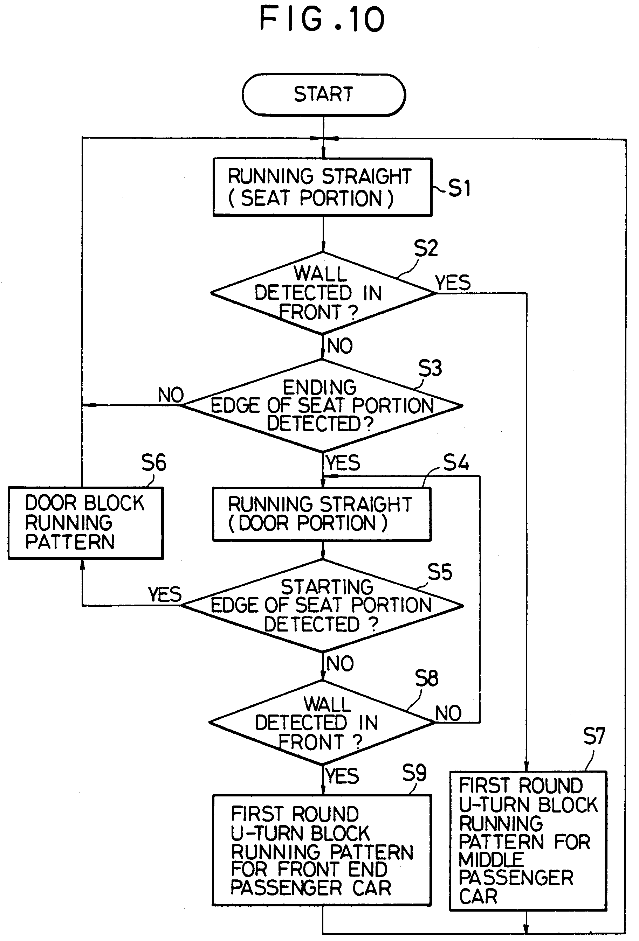

More specifically, the railroad passenger car cleaning robot of this embodiment carries out the first round of the floor wash cleaning operation according to the flow chart of Fig. 10 as follows.

First at the step S1, the floor wash cleaning operation starts from a start position ST located at a left rear corner position of the floor of the railroad passenger car 50 or 60, and progresses as the robot runs straight along the seat portion 51 on the left side of the railroad passenger car. Here, unless the wall 54 is detected in front by the obstacle sensor 13 at the step S2 in which case the process proceeds to the step S7 to be described below, the straight running is continued until the ending edge of the seat portion 51 is detected by the proximity sensor 15 at the step S3, by keep returning to the step S1.

When the ending edge of the seat portion 51 is detected at the step S3, the robot continues to run straight through the door portion 52 at the step S4, until the starting edge of the next seat portion 51 is detected at the step S5.

When the starting edge of the next seat portion 51 is detected at the step S5, the robot is stopped once and the wash cleaning operation of the door portion 52 is carried out at the step S6 according to the door block running pattern of Fig. 6 which brings the robot back to the position at which the starting edge of the next seat portion 51 is detected at the step S5, and the process returns to the step S1 so as to carry out the wash cleaning operation of the next seat portion 51. These steps S1 to S6 are repeated to take care of the alternately appearing seat portion 51 and door portion 52.

Here, while the starting edge of the next seat portion 51 is not detected at the step S5, the straight running is continued by keep returning to the step S4 unless the wall 62 is detected in front by the obstacle sensor 13 at the step S8 in which case the process proceeds to the step S9 to be described below.

In a case the wall 54 is detected in front by the obstacle sensor 13 at the step S2 while running straight along the seat portion 51, next at the step S7, it is judged that the robot has reached the front U-turn block 56 of the railroad passenger car which is the middle passenger car 50, such that the wash cleaning operation of the front U-turn block 56 is carried out according to the first round U-turn block running pattern shown in Fig. 7 which brings the robot to a right front corner position of the floor of the railroad passenger car along the foremost seat portion 51 on the right side of this railroad passenger car, and the process returns to the step S1 such that the steps S1 to S6 are repeated to take care of the alternately appearing seat portion 51 and door portion 52 on the right side of this railroad passenger car to complete the first round.

In a case the wall 62 is detected in front by the obstacle sensor 13 at the step S8 while running straight through the door portion 52, next at the step S9, it is judged that the robot has reached the front U-turn block 64 of the railroad passenger car which is the front end passenger car 60, such that the wash cleaning operation of the front U-turn block 64 is carried out according to the first round U-turn block running pattern shown in Fig. 8 which brings the robot to the starting edge of the foremost seat portion 51 on the right side of this railroad passenger car, and the process returns to the step S1 such that the steps S1 to S6 are repeated to take care of the alternately appearing seat portion 51 and door portion 52 on the right side of this railroad passenger car to complete the first round.

Thereafter, the wash cleaning operation is continued while the robot moves in the first round to second round U-turn block running pattern shown in Fig. 9, within the rear U-turn block 57 shown in Figs. 4 and 5, which places the robot at a rear end position shifted by a single sweeping width from the left rear corner position toward right, regardless of whether this railroad passenger car is the middle passenger car 50 or the front end passenger car 60.

Finally, the wash cleaning operation is continued as the robot runs straight all the way up to the front end, makes U-turn at the front end, runs straight all the way down to the rear end, and shifts the position at the rear end by a single sweeping width toward right, and so on, until the wash cleaning operation of the entire floor is completed at a stop position SP located at a central front end position of the interior of the railroad passenger car 50 or 60.

Now, the various operation patterns involved in the wash cleaning operation procedure outlined above will be described in further detail.

《《recognition of seat portion 51 and door portion 52》》

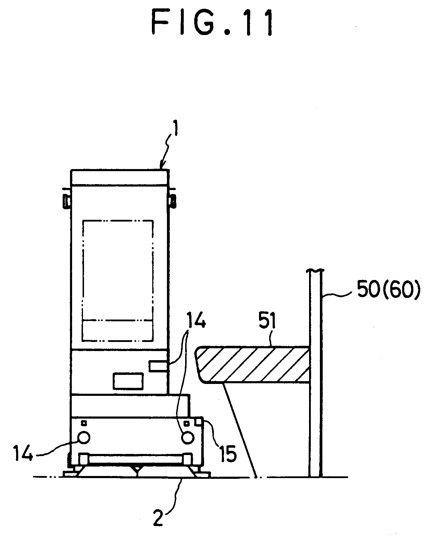

While the robot is running straight in the length direction of the railroad passenger car, the control device 18 recognizes the seat portion 51 and the door portion 52 according to a combination of the distance measurement data obtained by the distance measurement sensors 14 provided on the left side of the robot body 1 and the proximity data obtained by the proximity sensor 15 as follows. Namely, when the distance measurement data obtained by the distance measurement sensors 14 on the left side of the robot body 1 indicates that the presence of an object (seat cushion portion) on a left of the robot body 1 within a prescribed distance, or when the proximity data obtained by the proximity sensor 15 indicates the presence of an object (seat base portion) in an upper left direction of the robot body 1, it is judged that the robot is running along the seat portion 51 as shown in Fig. 11. On the other hand, when the distance measurement data obtained by the distance measurement sensors 14 on the left side of the robot body 1 indicates that the distance greater than the prescribed distance, and the proximity data obtained by the proximity sensor 15 indicates the absence of an object (seat base portion) in an upper left direction of the robot body 1, it is judged that the robot is running along the door portion 52.

《《detection of wall 54 or 62》》

The presence of the wall 54 or 62 in front of the robot is detected by the control device 18 whenever the distance measurement data obtained by the distance measurement sensors 14 provided on the front side of the robot body 1 indicates the distance less than or equal to a prescribed distance.

《《recognition of car type》》

The control device 18 recognizes the car type of the currently cleaned railroad passenger car as either one of the middle passenger car 50 and the front end passenger car 60 as follows.

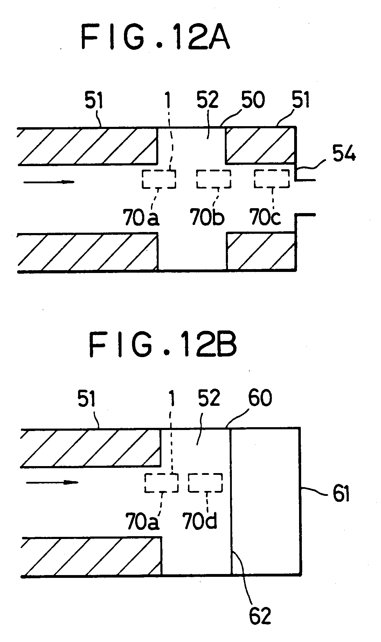

Namely, in a case of the middle passenger car 50, as shown in Fig. 12A, the front end portion is formed by the foremost door portion 52, the foremost seat portion 51 beyond the foremost door portion 52, and the wall 54 at the end of the foremost seat portion 51. On the other hand, in a case of the front end passenger car 60, as shown in Fig. 12B, the front end portion is formed by the foremost door portion 52, and the wall 62 of the driver's room at the end of the foremost door portion 52, without any seat portion therebetween.

Consequently, in a case of the middle passenger car 50 shown in Fig. 12A, after the foremost door portion 52 is detected at a position 70a and then the starting edge of the foremost seat portion 51 is detected at a position 70b, the judgement that it is the middle passenger car 50 is made when the wall 54 is detected at a position 70c by the distance measurement sensors 14 on the front side while still detecting the presence of the seat portion 51 to the left of the robot by the distance measurement sensors 14 and the proximity sensor 15 on the left side, so as to recognize that the robot has entered the front U-turn block 56 of the middle passenger car 50.

On the other hand, in a case of the front end passenger car 60 shown in Fig. 12B, after the foremost door portion 52 is detected at a position 70a, the judgement that it is the front end passenger car 60 is made when the wall 62 is detected at a position 70d by the distance measurement sensors 14 on the front side while not detecting the starting edge of the the seat portion 51 to the left of the robot by the distance measurement sensors 14 and the proximity sensor 15 on the left side, so as to recognize that the robot has entered the front U-turn block 64 of the front end passenger car 60.

《《door block running pattern》》

As indicated in detail in Fig. 6, the robot running straight along the seat portion 51 through a path (i) continues to run straight through the door portion 52 along this path (i) until the starting edge of the next seat portion 51 is detected. Then, the robot stops once, and moves backwards into a left rear end position in the door portion 52 along a path (ii). Then, the robot moves forwards along the door up to a left front end position in the door portion 52 along a path (iii) and stops once. Then, the robot moves backwards toward the ending edge of the previous seat portion 51 along a semi-circular path (iv) so as to face its front side toward the door portion 52, and then moves forward along the ending edge of the previous seat portion 51 up to the left rear end position in the door portion 52 along a path (v). Then, the robot moves backwards along the previous seat portion 51 through a path (vi) including a right angle turn at the ending edge of the previous seat portion 51 so as to restore its original orientation with its front side facing toward the front end of the railroad passenger car, and resumes its straight running along a path (vii).

By executing the wash cleaning operation by the washing brushes 2 continuously whenever the robot is moving forward in this door block running pattern, it becomes possible to carry out the wash cleaning of the entire door portion 52 and proceeds to the next seat seat portion 51 continuously.

《《first round U-turn block running pattern for middle passenger car 50》》

As indicated in detail in Fig. 7, when the robot running straight along the foremost seat portion 51 through a path (i) detects the wall 54 in front, it is judged that the robot has entered the front U-turn block 56 of the middle passenger car 50 as described above. In this case, when the wall 54 is detected, the robot stops once and moves straight backwards slightly along a path (ii), and then moves along a path (iii) so as to change its orientation by 90° to the right, and move along the front end of the front U-turn block 56 up to a right front end position of the front U-turn block 56, with its front side facing toward the foremost seat portion 51 on the right side of the railroad passenger car. Then, the robot moves straight backwards slightly along a path (iv), moves forwards along a path (v) to change its orientation by nearly 90° further to the right, and moves backwards along a path (vi) to the right front end position of the front U-turn block 56, with its front side facing toward the rear end of the railroad passenger car, such that the robot proceeds to the wash cleaning operation of the right side of the railroad passenger car by running straight along the foremost seat portion 51 through a path (vii).

By executing the wash cleaning operation by the washing brushes 2 continuously whenever the robot is moving forward in this first round U-turn block running pattern, it becomes possible to carry out the wash cleaning of the entire front U-turn block 56 and proceeds to the right side of the railroad passenger car continuously.

《《first round U-turn block running pattern for front end passenger car 60》》

As indicated in detail in Fig. 8, when the robot running straight along the foremost door portion 52 through a path (i) detects the wall 62 in front, it is judged that the robot has entered the front U-turn block 64 of the front end passenger car 60 as described above. In this case, when the wall 62 is detected, the robot stops once and moves backwards into a left rear end position in the foremost door portion 52 along a path (ii). Then, the robot moves forwards along the door up to a left front end position in the foremost door portion 52 along a path (iii) and stops once. Then, the robot moves backwards toward the ending edge of the foremost seat portion 51 along a semi-circular path (iv) so as to face its front side toward the foremost door portion 52, and then moves forward along the ending edge of the foremost seat portion 51 up to the left rear end position in the foremost door portion 52 along a path (v). Then, the robot moves backwards along the foremost seat portion 51 through a path (vi) including a right angle turn at the ending edge of the foremost seat portion 51 so as to restore its original orientation with its front side facing toward the front end of the railroad passenger car, and resumes its straight running along a path (vii) until the wall 62 is detected again.

When the wall 62 is detected again in front at the prescribed distance which is approximately equal to the length of the robot body 1, the robot changes its orientation by 90° to the right there and moves straight forward along the wall 62 through a path (viii) with its front side facing toward the foremost door portion 52 on the right side of the railroad passenger car, until it stops when the door of the foremost door portion 52 on the right side is detected by the distance measurement sensors 14 provided on the front side of the robot body 1. Then, the robot moves backwards to the left front end position of the front U-turn block 64 along a path (ix) and then moves straight forward along the wall 62 to the right front end position of the front U-turn block 64 along a path (x) until it stops when the door of the foremost door portion 52 on the right side is detected again. Then, the robot moves straight backwards for a distance equal to a side length of the seat portion 51 and changes its orientation by 90° to the right, so as to have its front side facing toward the rear end of the railroad passenger car, and then runs forwards along a path (xii) until the starting edge of the foremost seat portion 51 on the right side of the railroad passenger car is detected.

Then, the robot stops once, and moves backwards into a right front end position in the foremost door portion 52 on the right side along a path (xiii). Then, the robot moves forwards along the door up to a right rear end position in the foremost door portion 52 on the right side along a path (xiv) and stops once. Then, the robot moves backwards slightly along a path (xv) and then moves obliquely forward toward the starting edge of the foremost seat portion 51 on the right side, and changes its orientation to have its front side facing toward the rear end of the railroad passenger car, such that the robot proceeds to the wash cleaning operation of the right side of the railroad passenger car by running straight along the foremost seat portion 51 through a path (xvi).

By executing the wash cleaning operation by the washing brushes 2 continuously whenever the robot is moving forward in this first round U-turn block running pattern, it becomes possible to carry out the wash cleaning of the entire front U-turn block 64 and proceeds to the right side of the railroad passenger car continuously.

《《first round to second round U-turn block running pattern》》

As indicated in detail in Fig. 9, when the robot running straight along the foremost seat portion 51 on the right side of the railroad passenger car through a path (i) detects the wall 54 in front, it is judged that the robot has entered the rear U-turn block 57 of the railroad passenger car as described above. In this case, when the wall 54 is detected, the robot stops once and moves straight backwards slightly along a path (ii), and then moves along a path (iii) so as to change its orientation by 90° to the right, and move along the rear end of the rear U-turn block 57 up to a left rear end position of the rear U-turn block 57, with its front side facing toward the rearmost seat portion 51 on the left side of the railroad passenger car. Then, the robot moves straight backwards for a single sweep width along a path (iv), changes its orientation by 90° further to the right, and moves forwards along a path (v), with its front side facing toward the front end of the railroad passenger car again, such that the robot proceeds to the second and subsequent rounds of the wash cleaning operation of the railroad passenger car.

By executing the wash cleaning operation by the washing brushes 2 continuously whenever the robot is moving forward in this first round to second round U-turn block running pattern, it becomes possible to carry out the wash cleaning of the entire rear U-turn block 57 and proceeds to the next round continuously.

Here, it is to be noted that in the second and subsequent rounds of the wash cleaning operation, the robot takes a continuous spiral path formed by the straight running between the front and rear ends of the railroad passenger car and the running patterns at the front U-turn block 56 or 64 and the rear U-turn block 57 similar to those described above, except that the robot sweeps a single sweeping width inward of the floor portions already cleaned by the previous rounds, until the wash cleaning of the entire floor of the railroad passenger car is completed as the robot reaches to the stop position SP.

Now, if the entire running pattern between the start position ST to the stop position SP predetermined according to the known interior configuration of the railroad passenger car in each car type is memorized in advance by using an IC card for example, there is a possibility of carrying out the wasteful wash cleaning operation of the already cleaned floor portions again in a case the wash cleaning operation has interrupted in a middle for some reason so that the entire wash cleaning operation must be repeated all over again from the start position ST.

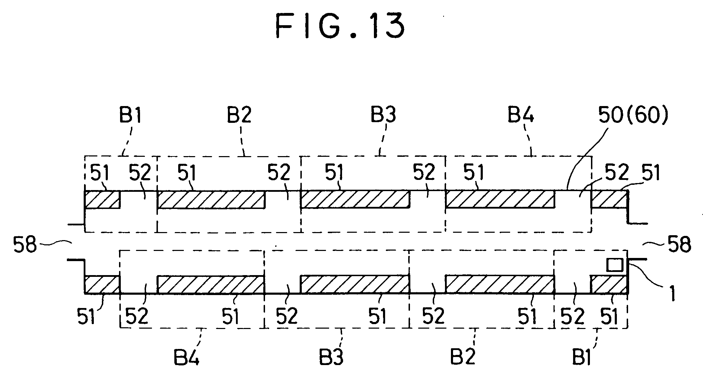

In order to remove this inconveniency, the entire interior configuration of the railroad passenger car can be divided into a plurality of blocks B1, B2, etc., where each block comprises a seat portion 51 and an adjacent door portion 52, as shown in Fig. 13 for a case of the middle passenger car 50 as an example. Similar division can also be made for the front end passenger car 60. Then, the running pattern within each block starting from the starting edge of the seat portion 51 is memorized separately, such that when the wash cleaning operation has interrupted in a middle for some reason, the wash cleaning operation can be resumed from a block at which it has interrupted in a middle, without repeating the entire wash cleaning operation from the start position ST, so that the wasteful wash cleaning operation of the already cleaned floor portions can be avoided.

It is to be noted that the manner of dividing the interior configuration of the railroad passenger car is not necessarily limited to that described above in which each block comprises a seat portion 51 and an adjacent door portion 52. For example, each block may comprises a door portion 52 and an adjacent seat portion 51, for example.

CLEANING CONTROL ACCORDING TO LEVEL OF CONTAMINATION

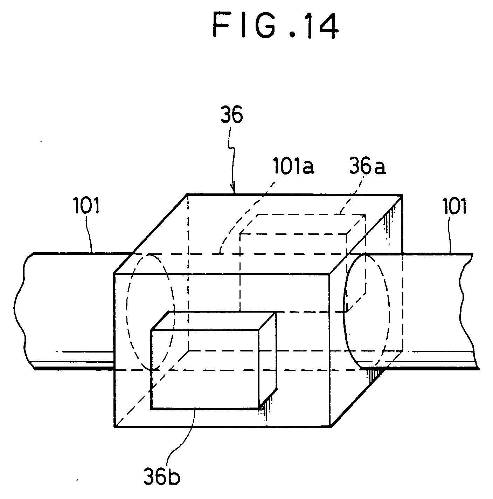

Referring now to Fig. 14, a cleaning control to achieve the uniform finish by using the water analysis sensor 36 for analyzing a level of pollution of the dirty water sucked up by the suction device 34 according to a light transmission level through the dirty water will be described in detail.

An exemplary configuration of the water analysis sensor 36 to be used in this embodiment is shown in Fig. 14, which is provided on dirty water duct 101 for leading the dirty water sucked up by the suction device 34 to the dirty water tank 8, and which comprises: a light irradiation unit 36a for irradiating a predetermined constant amount of lights to a transparent portion 101a of the dirty water duct 101; and a light detection unit 36b for detecting an amount of lights irradiated by the light irradiation unit 36a and transmitted through the dirty water flowing in the transparent portion 101a.

The amount of transmitted lights detected by the light detection unit 36b is then given to the control device 18, according to which the control device 18 calculates a light transmission rate indicative of a transparency of the dirty water in the dirty water duct 101, and judges the level of contamination of the currently cleaned floor portion. Then, in a case the level of contamination of the currently cleaned floor portion is judged to be heavily contaminated, the cleaning controller 43 of the control device 18 controls the robot to repeat the wash cleaning operation at the currently cleaned floor portion with slower running speed than usual. In a case the level of contamination of the currently cleaned floor portion is judged to be lightly contaminated, the cleaning controller 43 of the control device 18 controls the robot to repeat the wash cleaning operation at the currently cleaned floor portion with slightly slower running speed than usual. In this manner, the time spent for wash cleaning each floor portion is controlled spot to spot, according to the level of contamination of each floor portion.

For example, the floor portion can be judged to be more contaminated than average in a case the obtained light transmission rate is less than or equal to 50%, in which case the robot can be moved backwards for a predetermined short distance, and then moved forwards while executing the wash cleaning with a forward running speed set to be (obtained light transmission rate/prescribed running speed coefficient), such that the heavily contaminated floor portion determined by the low light transmission rate of the dirty water can be wash cleaned again with a slower running speed, while only lightly contaminated floor portion for which the light transmission rate is within a range of 40 to 50% for example can be wash cleaned again with only a slightly slower running speed. In this manner, it becomes possible in this embodiment to achieve the uniform finish after the wash cleaning operation has completed, regardless of the spot to spot variations of the level of contamination on the floor before the wash cleaning.

It is to be noted here that the use of the light transmission rate of 50% as an indication of the critical level of contamination as described above is only an illustrative example, and may be replaced by any other convenient criteria that can be determined empirically.

STEERING CONTROL

Next, the steering control during the running operation by the railroad passenger car cleaning robot of this embodiment will be described in detail.

In this embodiment, the running control of the robot is made by the running controller 41 of the control device 18, according to the rotational speeds of the DC motors 23$\ell$ and 23r obtained by the encoders (ENC) 24$\ell$ and 24r as the input data indicative of the running distances for the left and right driving wheels 4$\ell$ and 4r.

On the other hand, the control device 18 has predetermined distance data specifying a running reference line indicative of where the robot should be located in each instance of its running operation in terms of distances with respect to the seat portion 51, the door portion 52, and the walls 54 or 62, for each of the first round, the second and subsequent rounds, the first U-turn block 56 or 64, and the first to second U-turn block 57, etc.

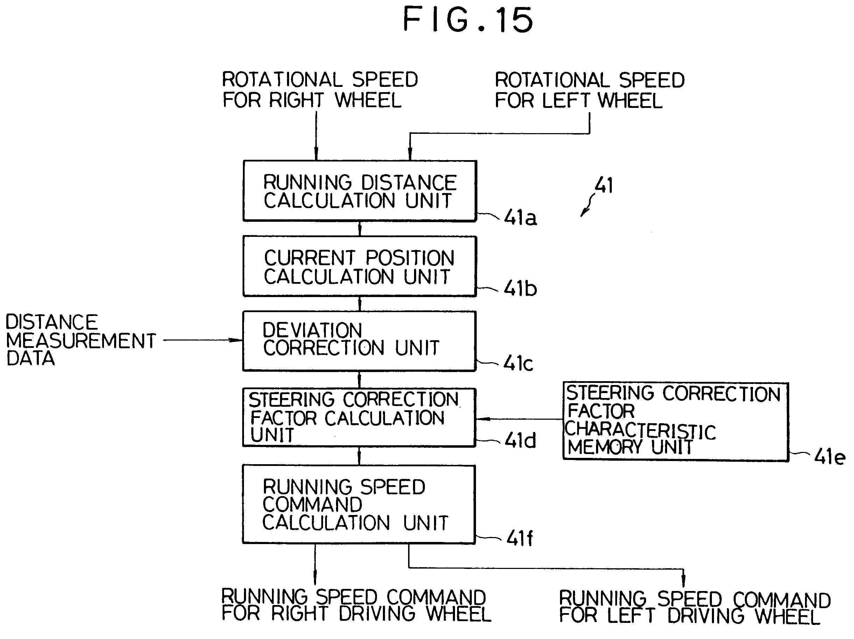

Accordingly, the running controller 41 of the control device 18 has a detailed configuration as shown in Fig. 15 which comprises: a running distance calculation unit 41a for calculating the running distance for each of the left and right driving wheels 4$\ell$ and 4r according to the rotational speeds of the DC motors 23$\ell$ and 23r supplied from the encoders (ENC) 24$\ell$ and 24r; a current position calculation unit 41b for calculating a current position of the robot in terms of the distance X from the start position ST and the deviation Y from the predetermined running reference line, according to the running distances calculated by the running distance calculation unit 41a; a deviation correction unit 41c for correcting the calculated value of the deviation Y by the value indicated by the distance measurement data supplied from the distance measurement sensors 14; a steering correction factor calculation unit 41d for calculating a steering correction factor according to the deviation Y corrected by the deviation correction unit 41c; a steering characteristic memory unit 41e for storing the predetermined steering correction factor characteristic to be utilized in calculating the steering correction factor at the steering correction factor calculation unit 41d; and a running speed command calculation unit 41f for calculating the running speed command V' by adding the steering correction factor S calculated by the steering correction factor calculation unit 41d to a normal running speed command V, i.e., $V' = V + S$, for each of the left and right driving wheels 4$\ell$ and 4r, such that the desired steering control can be achieved when one of the left and right driving wheels 4$\ell$ and 4r is driven according to the running speed command V' accounting for the appropriate steering correction factor S while the other one of the left and right driving wheels 4$\ell$ and 4r is driven according to the normal running speed command V.

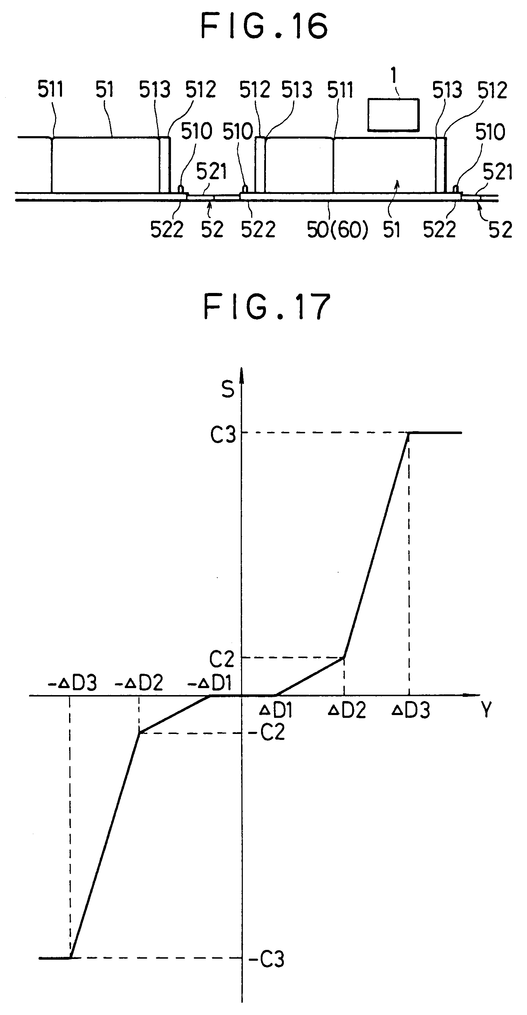

Now, as shown in Fig. 16, in executing the straight running of the robot along the seat portion 51 and the door portion 52 in the railroad passenger car 50 or 60 as described above, the distance measurement data obtained by the distance measurement sensors 14 may have the minute fluctuations due to the irregular features such as a level difference between the door 521 and the door box 522 in the door portion 52, a level difference between the door 521 and the handrail 510 on the door box 522, a level difference due to a seam portion 511 between adjacent seats in the seat portion 51, and a level difference due to a seam portion 513 between an end of a seat and a seat frame 512 in the seat portion 51.

Here, if the steering is controlled in response to the deviation Y from the running reference line due to each of these minute fluctuations in the distance measurement data, the running operation of the robot can be made unstable, so that it is preferable to ignore the deviations due to excessively minute fluctuations in the distance measurement data. On the other hand, when the deviation from the running reference line is large, it is preferable to control the steering at large amount so that the deviation can be cancelled quickly. However, when the deviation from the running reference line is excessively large, if the steering is controlled for an excessively large amount in accordance with such an excessively large deviation, the robot may spin around at a spot, so that it is preferable to avoid the steering at excessively large amount.

For these reasons, the steering correction factor characteristic stored in the steering correction factor characteristic memory unit 41e is given as a functional relationship between the steering correction factor S and the deviation Y as shown in Fig. 17, where the steering correction factor S is zero for very small deviation $|Y| \leq \Delta D1$, the steering correction factor S is only moderately proportional to not so large deviation $\Delta D1 < |Y| \leq \Delta D2$, the steering correction factor S is sharply proportional to large deviation $\Delta D2 < |Y| \leq \Delta D3$, and the steering correction factor S is constant for excessively large deviation $|Y| > \Delta D3$, where $|\Delta D1| < |\Delta D2| < |\Delta D3|$. It is to be noted here that the actual values taken by the steering correction factor S depend on a steering factor $SPD = V/K$, where V is a current running speed and K is a prescribed constant, so that the slopes of oblique lines in Fig. 17 become larger for the higher current running speed V.

Thus, this running controller 41 operates according to the flow chart of Fig. 18, as follows.

First, the rotational speed data for the right driving wheel 4r is supplied from the encoder (ENC) 24r to the running distance calculation unit 41a and the running distance for the right driving wheel 4r is calculated at the step S11, and then the rotational speed data for the left driving wheel $4\ell$ is supplied from the encoder (ENC) $24\ell$ to the running distance calculation unit 41a and the running distance for the left driving wheel $4\ell$ is calculated at the step S12.

Then, at the step S13, the current position of the robot is determined by the current position calculation unit 41b according to the running distances obtained by the running distance calculation unit 41a at the steps S11 and S12 in terms of the distance X and the deviation Y.

Then, in a case it is possible to enter the distance measurement data from the distance measurement sensors 14 at the step S14, the distance measurement data is entered from the distance measurement sensors 14 to the deviation correction unit 41c at the step S15, and the deviation Y for the current position obtained by the current position calculation unit 41b at the step S13 is corrected by the deviation correction unit 41c to the distance measurement data entered at the step S16. Otherwise these steps S15 and S16 are skipped.

Next, at the step S17, whether the deviation Y is an excessively large negative one $Y < -\Delta D3$ or not is determined. If so, the steering correction factor S is set equal to a constant value $-C3 = -SPD \times (1 + \Delta D3/\Delta D2)$ regardless of the size of the deviation Y at the next step S18 and the process returns to the initial state, whereas otherwise the process proceeds to the step S19 next.

Next, at the step S19, whether the deviation Y is an excessively large positive one $Y < \Delta D3$ or not is determined. If so, the steering correction factor S is set equal to a constant value $C3 = SPD \times (1 + \Delta D3/\Delta D2)$ regardless of the size of the deviation Y at the next step S20 and the process returns to the initial state, whereas otherwise the process proceeds to the step S21 next.

Next, at the step S21, whether the deviation Y is at least moderately large negative one $Y < -\Delta D1$ or not is determined. If so, next at the step S22, whether the deviation Y is sufficiently large negative one $Y < -\Delta D2$ or not is determined. If so, the steering correction factor S is set to be $S = -SPD \times (1 - Y/\Delta D2)$ in accordance with the size of the deviation Y at the next step S24 and the process returns to the initial state, whereas otherwise the steering correction factor S is set to be $S = (Y + \Delta D1) \times C2/(\Delta D2 - \Delta D1)$, where $C2 = 2SPD$, in accordance with the size of the deviation Y at the next step S23 and the process returns to the initial state.

If the deviation is not at least moderately large negative one $Y < -\Delta D1$ at the step S21, the process proceeds to the step S25 next.

At the step S25, whether the deviation Y is at least moderately large positive one $Y > \Delta D1$ or not is determined. If so, next at the step S26, whether the deviation Y is sufficiently large positive one $Y > \Delta D2$ or not is determined. If so, the steering correction factor S is set to be $S = SPD \times (1 + Y/\Delta D2)$ in accordance with the size of the deviation Y at the next step S28 and the process returns to the initial state, whereas otherwise the steering correction factor S is set to be $S = (Y - \Delta D1) \times C2/(\Delta D2 - \Delta D1)$, where $C2 = 2SPD$, in accordance with the size of the deviation Y at the next step S27 and the process returns to the initial state.

If the deviation is neither at least moderately large negative one $Y < -\Delta D1$ at the step S21, nor at least moderately large positive one $Y > \Delta D1$ at the step S25, the steering correction factor S is set equal to zero at the next step S29 and the process returns to the initial state.

As a result, in this embodiment, in executing the straight running of the robot along the seat portion 51 and the door portion 52 in the railroad passenger car 50 or 60 as described above, the steering is not controlled at all for the minute fluctuations due to the irregular features such as those already mentioned above, while the steering is controlled at large amount sharply proportional to the size of the deviation Y when the deviation from the running reference line is large so that the deviation can be cancelled quickly, but the amount of controlling the steering is upper bounded for the excessively large deviation from the running reference line is excessively so that the spinning of the robot around at a spot can be avoided.

It is to be noted that the steering correction factor characteristic of Fig. 17 described above in which the deviation is classified into four categories is only an illustrative example, and the different characteristics such as those in which the deviation is classified into more than four categories, or less than four categories, may be used if desired.

CABLE TENSION CONTROL

Next, the cable tension control during the running operation by the railroad passenger car cleaning robot of this embodiment will be described in detail.

Namely, during the running operation of the robot, the cable tension control section 25 automatically controls the tension of the the power supply cable 5 to be constant by appropriately rewinding or rolling out the power supply cable 5 by the cable rewind device 6, in order to avoid the power supply cable 5 from slacking down onto the floor and tangling with the robot body 1 itself, under the control by the rewinding controller 42.

In this embodiment, as shown in Fig. 19, the cable tension control section 25 includes; a take-up reel 710 provided within a cable rewind device 6 for rewinding or rolling out the power supply cable 5; the DC motor 27 for driving the take-up reel 710, the encoder 28 for detecting the rotational speed and the direction of rotation of the DC motor 27; a tension arm 73 for applying a constant tension to the power supply cable 5; a spring 74 connected with the tension arm 73 for providing the tension to the tension arm 73; and a potentiometer 75 for outputting a voltage signal indicative of the stretch of the spring 74.

This cable tension control section 25 is initially in a state as shown in Fig. 20A in which a specified tension is applied to the power supply cable 5.

Then, when the robot moves away from the power source, the power supply cable 5 must be rolled out so that the cable tension control section 25 is put in a state as shown in Fig. 20B where the tension arm 73 is pulled toward the power supply as the power supply cable 5 is pulled toward the power source such that the spring 74 is stretched and the voltage signal outputted from the potentiometer increases. In this case, the rewinding controller 42 controls the DC motor 27 to rotate the take-up reel 710 in the rolling out direction according to the voltage signal outputted from the potentiometer 75, so as to maintain the constant tension on the power supply cable 5.

On the other hand, when the robot moves toward the power source, the power supply cable 5 must be rewound so that the cable tension control section 25 is put in a state as shown in Fig. 20C where the tension arm 73 is pulled back by the spring 74 as the tension on the power supply cable 5 decreases such that the spring 74 is compressed and the voltage signal outputted from the potentiometer decreases. In this case, the rewinding controller 42 controls the DC motor 27 to rotate the take-up reel 710 in the rewinding direction according to the voltage signal outputted from the potentiometer 75, so as to maintain the constant tension on the power supply cable 5.

In order realize such a controlling, as shown in Fig. 21, the rewinding controller 42 of this embodiment includes: an adder 76 for subtracting an externally specified offset according to the running speed, cable length, running mode such as corner or straight, running position, and running direction, from the specified tension command; an adder 77 for subtracting the voltage signal outputted from the potentiometer 75 which is A/D converted by an A/D converter 78 from the output of the adder 76; an adder 79 for subtracting the rotational speed obtained by the encoder (ENC) 28 from the output of the adder 77. The output of the adder 79 is then supplied to the cable rewinding driver 26 of the cable tension control section 25 which drives the DC motor (DCM) 27.

More specifically, the cable tension control in this embodiment is carried out according to the flow chart of Fig. 22 as follows.

First, the specified tension is set in the rewinding controller 42 at the step S31, and the cable tension on the power supply cable 5 is detected by the potentiometer 75 at the step S32.

Then, whether this detected tension is equal to the specified tension or not is determined at the step S33. In a case they are equal, next at the step S34, the stop command is generated at the rewinding controller 42 and supplied to the cable rewinding driver 26, and the process proceeds to the step 38 described below.

Otherwise, next at the step S35, whether the detected tension is greater than the specified tension or not is determined. In a case the detected tension is not greater than the specified tension, next at the step S36, the rotation command for rewinding direction is generated at the rewinding controller 42 and supplied to the cable rewinding driver 26, and the process proceeds to the step 38 described below.

Otherwise, next at the step S37, the rotation command for rolling out direction is generated at the rewinding controller 42 and supplied to the cable rewinding driver 26, and the process proceeds to the step 38 described below.

Then, at the step S38, the cable rewinding driver 26 controls the DC motor 27 in accordance with the stop command or the rotation command supplied from the rewinding controller 42, such that the constant tension is maintained on the power supply cable 5 as the rotation of the take-up reel 710 is appropriately controlled at the step S39.

These steps S32 to S39 are then repeated until the operation end command for terminating the running operation of the robot is entered at the step S40.

Now, the similar cable tension control can be realized even in a case in which the robot changes its orientation during the running operation as follows.

Namely, in a case the robot moves straight with respect to the power source, as shown in Fig. 23A, the cable outlet 711 of the cable rewind device 6 is constantly pointing toward the power source, so that the cable tension control as described above in which the rewinding and the rolling out of the power supply cable 5 is controlled with respect to a single constant specified tension is sufficient. However, in a case the movement of the robot includes a change of its orientation as in a case of corner running or U-turn running, there are cases in which the cable outlet 711 is not pointing toward the power source as shown in Fig. 23B. In such a case, it is possible for the detected tension on the power supply cable 5 to be increased even when the robot is approaching to the power source, and accordingly the cable rewind device 6 rolls out the power supply cable 5 such that the power supply cable 5 can be slacken down onto the floor and run over by the robot itself. Here, although this problem may be resolved by increasing the specified tension to be sufficiently tight, but such the pulling of the power supply cable 5 with such a tight cable tension may cause some undesirable effects on the running operation of the robot itself.

In order to cope with such a situation, in this embodiment, the specified tension to be set in the rewind 0.0mm 0.0mm 0.0 the left and right driving wheel where the specified tension is set to be weaker for a case of straight running and stronger for a case of corner running according to the difference of the rotational speeds of the left and right driving wheels $4\ell$ and 4r, such that the cable outlet 711 constantly points toward the power source even when the robot changes its orientation.

To this end, the rewinding controller 42 has a configuration as shown in Fig. 25, which comprises: a speed input unit 81 for entering the rotational speeds of the left and right DC motors 23$\ell$ and 23r obtained by the encoders 24$\ell$ and 24r for the left and right driving wheels 4$\ell$ and 4r; a speed difference calculation unit 82 for calculating a speed difference between the rotational speeds entered by the speed input unit 81; a tension command calculation unit 83 for calculating the appropriate tension command according to the speed difference calculated by the speed difference calculation unit 82; and a speed command calculation unit 86 for calculating the appropriate speed command according to a difference between the tension command calculated by the tension command calculation unit 83 and the detected tension supplied from the A/D converter 78.

In this configuration of Fig. 25, the rotational speeds V$\ell$ and Vr of the left and right DC motors 23$\ell$ and 23r obtained by the encoders 24$\ell$ and 24r for the left and right driving wheels 4$\ell$ and 4r are entered at the speed input unit 81 and then the speed difference calculation unit 82 calculates a speed difference D between the entered rotational speeds, i.e., D = |V$\ell$ - Vr| .

Then, at the tension command calculation unit 83, when the speed difference D is less than or equal to a prescribed minimum value MIN, the tension T is set equal to a prescribed value T1 for the straight running, whereas when the speed difference D is greater than or equal to a prescribed maximum value MAX, the tension T is set equal to a prescribed value T2 for the corner running. For the speed difference D between MIN and MAX, i.e., MIN < D < MAX, the tension T is calculated as $T = D \times$ prescribed coefficient . The tension command calculation unit 83 then outputs the obtained tension T as the tension command.

The tension command outputted from the tension command calculation unit 83 is then entered into the adder 77 for subtracting the detected tension on the power supply cable 5 supplied from the A/D converter 78 from the tension command to obtain a tension error E.

Then, the speed command calculation unit 86 calculates the appropriate speed command V(t) to be given to the cable rewinding driver 26 according to the tension error E supplied from the adder 77 as follows.

$$V(t) = kp \cdot En + kd \cdot (En - En\text{-}1) + Ki \cdot (En + En\text{-}1 + En\text{-}2 + \cdots\cdots + En\text{-}\tau)/\tau$$

where kp is a proportional gain, kd is a differential gain, ki is an integral gain, En is an n-th tension error, and $\tau$ is an integration sampling time.

The speed command V(t) obtained by the speed command calculation unit 86 is then supplied to the cable rewinding driver 26 such that the rotation of the DC motor 27 for driving the take-up reel 710 can be appropriately controlled to make the cable outlet 711 constantly pointing toward the power source even when the robot changes its orientation.

It is to be noted here that, in practice, the speed control of the DC motor 27 can be carried out at a constant time interval of approximately 10 ms for the sufficient realization of the cable tension control.

It is further to be noted here that, besides those already mentioned above, many modifications and variations of the above embodiments may be made without departing from the novel and advantageous features of the present invention. Accordingly, all such modifications and variations are intended to be included within the scope of the appended claims.

Reference signs in the claims are intended for better understanding and shall not limit the scope.

## Claims

1. A railroad passenger car cleaning robot, comprising:

    driving means (4, 21) for executing a running operation on a floor;

    running control means (41) for controlling the driving means (4, 21) to realize the running operation along a continuous running pattern; and

    cleaning means (2, 29) for executing a wash cleaning operation on the floor;

    characterized by further comprising

    dirty water collection means (3, 8, 29) for collecting dirty water resulting from the wash cleaning operation executed by the cleaning means (2, 29);

    water analysis sensor means (36) for detecting a light transmission rate through the dirty water collected by the dirty water collection means (3, 8, 29); and

    cleaning control means (43) for controlling the wash cleaning operation executed by the cleaning means (2, 29) according to the light transmission rate detected by the water analysis sensor means (36).

**2.** The robot of claim 1, wherein the running control means (41) controls the driving means (4, 21) to run backwards for a prescribed distance on the continuous running pattern when the right transmission rate detected by the water analysis sensor means (36) is lower than a predetermined threshold level.

**3.** The robot of claim 2, wherein, after the driving means (4, 21) is controlled to run backwards for the prescribed distance, the cleaning control means (43) controls a speed of the wash control operation executed by the cleaning means (2, 29) to be slower for a lower value of the light transmission rate detected by the water analysis sensor means (36).

**4.** The robot of claim 1, further comprising:

distance measurement sensor means (14) for measuring distances of the robot with respect to any one of a seat portion, a door portion, and a wall of the railroad passenger car, in front of and on one side of the robot; and

proximity sensor means (15) for detecting a presence of the seat portion of the railroad passenger car on said one side of the robot;

wherein the running control means (41) controls the driving means (4, 21) according to the distances measured by the distance measurement sensor means (14) and the presence of the seat portion detected by the proximity sensor means (15).

**5.** The robot of claim 4, wherein the running control means (41) controls the driving means (4, 21) to realize the running operation along the continuous running pattern progressing from a circumferential part of the floor along seat portions, door portions, and walls of the railroad passenger car, to a central part of the floor of the railroad passenger car, continuously.

**6.** The robot of claim 4, wherein the running control means (41) controls the driving means (4, 21) to realize the running operation along the continuous running pattern starting at one end part of the floor of the railroad passenger car and ending at another end part of the floor of the railroad passenger car, continuously.

**7.** The robot of claim 4, further comprising:

obstacle sensor means (13) for detecting a presence of an obstacle in front of the robot; and

car type detector means (40) for judging a car type of the railroad passenger car according to the distances measured by the distance measurement sensor means (14), the presence of the seat portion detected by the proximity sensor means (15), and the presence of the obstacle detected by the obstacle sensor means (13);

wherein the running control means (41) controls the driving means (4, 21) such that the continuous running pattern is changed according to the car type judged by the car type detector means (40).

**8.** The robot of claim 4, wherein the floor of the railroad passenger car is divided into a plurality of blocks, and the running control means (41) controls the driving means (4, 21) in terms of the continuous running pattern specified within each block separately.

**9.** The robot of claim 4, wherein the running control means (41) includes:

position deviation determination means (41a, 41b, 41c) for determining a deviation of a current position of the robot from a desired position on the continuous running pattern; and

steering correction factor calculation means (41d, 4le, 41f) for calculating a steering correction factor according to a size of the deviation determined by the position deviation determination means (41a, 41b, 41c) and supplying the calculated steering correction factor to the driving means (4, 21) such that the driving means (4, 21) executes a steering correction corresponding to the steering correction factor supplied from the steering correction factor calculation means (41d, 4le, 41f).

**10.** The robot of claim 9, wherein the size of the deviation is classified into a plurality of classes including an excessively large deviation class for which the steering correction factor is set to a prescribed constant value, and an excessively small deviation class for which the steering correction factor is set to zero.

**11.** The robot of claim 9, wherein the size of the deviation is classified into a plurality of classes including a relatively large deviation class for which the steering correction factor is calculated to be sharply proportional to the size of the deviation, and a relatively small deviation class for which the steering correction factor is calculated to be moderately proportional to the size of the deviation.

**12.** The robot of claim 9, wherein the position deviation determination means (41a, 41b, 41c) determines the deviation according to running distances of left and right driving wheels (4ℓ, 4r) of the driving means (4, 21).

**13.** The robot of claim 9, wherein the position deviation determination means (41a, 41b, 41c) determines the deviation according to the distances measured by the distance measurement sensor means (14).

**14.** The robot of claim 4, further comprising:

cable winding means (710) for winding a power supply cable (5) for supplying an operation power to the robot;

cable tension detection means (73, 74, 75) for detecting a tension on the power supply cable (5); and

winding control means (25) for controlling a direction and an amount of winding of the power supply cable (5) by the cable winding means (710) according to the tension detected by the cable tension detection means (73, 74, 75).

**15.** The robot of claim 14, wherein the cable tension detection means includes a tension arm mechanism (73, 74) movable in response to the tension on the power supply cable (5) and a potentiometer (75) for detecting a movement of the tension arm mechanism (73, 74) as the tension on the power supply cable (5).

**16.** The robot of claim 14, wherein the winding control means (25) controls the direction and the amount of the winding of the power supply cable (5) by the cable winding means (710) to adjust the tension detected by the cable tension detection means (73, 74, 75) to a prescribed constant value.

**17.** The robot of claim 14, further comprising:

speed difference detection means (81, 82) for detecting a speed difference between running speeds of a left driving wheel (4ℓ) and a right driving wheel (4r) In the driving means (4, 21); and

desired tension calculation means (83) for calculating a desired tension according to the speed difference detected by the speed difference detection means (81, 82);

and wherein the winding control means (25) controls the direction and the amount of the winding of the power supply cable (5) by the cable winding means (710) to adjust the tension detected by the cable tension detection means (73, 74, 75) to the desired tension calculated by the desired tension calculation means (83).

**18.** The robot of claim 17, wherein the desired tension calculation means (83) calculates the desired tension to be proportional to the speed difference detected by the speed difference detection means (81, 82).

**19.** The robot of claim 17, wherein the desired tension calculation means (83) calculates the desired tension to be a constant maximum value when the speed difference detected by the speed difference detection means (81, 82) is greater than a prescribed upper threshold and to be a constant minimum value when the speed difference detected by the speed difference detection means (81, 82) is less than a prescribed lower threshold.

**20.** The robot of claim 17, wherein the cable winding means (710) is freely rotatable on a horizontal plane such that the power supply cable (5) wound around the cable winding means (710) can be extended in an arbitrary direction on the horizontal plane with respect to the robot.

**Patentansprüche**

**1.** Eisenbahnpassagierwagon-Reinigungsroboter, mit:

Antriebseinrichtungen (4, 21) zum Ausführen eines Laufvorganges auf einem Boden;

Laufsteuereinrichtungen (41) zum Steuern der Antriebseinrichtungen (4, 21), um den Laufvorgang entlang einem kontinuierlichen Laufmuster zu realisieren; und

Reinigungseinrichtungen (2,29) zum Ausführen eines Waschreinigungsvorganges auf dem Boden;

gekennzeichnet durch

Schmutzwassersammeleinrichtungen (3, 8, 29) zum Sammeln von von dem Waschreinigungsvorgang, der von den Reinigungseinrichtungen (2, 29) ausgeführt wird, resultierendem Schmutzwasser;

Wasseranalysesensoreinrichtungen (36) zum Erfassen einer Lichttransmissionsrate durch das mittels der Schmutzwassersammeleinrichtungen (3, 8, 29) gesammelte Schmutzwasser; und

Reinigungssteuereinrichtungen (43) zum Steuern des von den Reinigungseinrichtungen (2, 29) ausgeführten Waschreinigungsvorganges gemäß der mittels der Wasseranalysesensoreinrichtungen (36) erfaßten Lichttransmissionsrate.

2. Roboter nach Anspruch 1, dadurch gekennzeichnet, daß die Laufsteuereinrichtung (41) die Antriebseinrichtungen (4, 21) steuert, eine vorgeschriebene Entfernung auf dem kontinuierlichen Laufmuster rückwärts zu laufen, wenn die mittels der Wasseranalysesensoreinrichtungen (36) erfaßte Lichttransmissionsrate niedriger ist als ein vorbestimmtes Schwellenniveau.

3. Roboter nach Anspruch 2, dadurch gekennzeichnet, daß nachdem die Antriebseinrichtung (4, 21) gesteuert wird, die vorgeschriebene Entfernung rückwärts zu laufen, die Reinigungssteuereinrichtung (43) eine Geschwindigkeit des von den Reinigungseinrichtungen (2, 29) ausgeführten Waschsteuervorganges steuert, für einen niedrigeren Wert der von den Wasseranalysesensoreinrichtungen (36) erfaßten Lichttransmissionsrate langsamer zu sein.

4. Roboter nach Anspruch 1, gekennzeichnet durch

Entfernungsmessungs-Sensoreinrichtungen (14) zum Messen von Entfernungen des Roboters bezüglich eines Sitzabschnittes, eines Türabschnittes oder einer Wand des Eisenbahnpassagierwagons, vor dem Roboter und auf einer Seite des Roboters; und

Näherungssensoreinrichtungen (15) zum Erfassen einer Gegenwart des Sitzabschnittes des Eisenbahnpassagierwagons auf der einen Seite des Roboters;

worin die Laufsteuereinrichtung (41) die Antriebseinrichtungen (4, 21) gemäß den mittels der Entfernungsmessungs-Sensoreinrichtungen (14) gemessenen Entfernungen und der mittels der Näherungssensoreinrichtungen (15) erfaßten Gegenwart des Sitzabschnittes steuert.

5. Roboter nach Anspruch 4, dadurch gekennzeichnet, daß die Laufsteuereinrichtung (41) die Antriebseinrichtung (4, 21) steuert, den Laufvorgang entlang dem kontinuierlichen Laufmuster zu realisieren, welches von einem Umfangsteil des Bodens entlang Sitzabschnitten, Türabschnitten und Wänden des Eisenbahnpassagierwagons kontinuierlich zu einem zentralen Teil des Bodens des Eisenbahnpassagierwagons fortschreitet.

6. Roboter nach Anspruch 4, dadurch gekennzeichnet, daß die Laufsteuereinrichtung (41) die Antriebseinrichtungen (4, 21) steuert, den Laufvorgang entlang dem kontinuierlichen Laufmuster zu realisieren, welches an einem Endteil des Bodens des Eisenbahnpassagierwagons beginnt und an einem anderen Endteil des Bodens des Eisenbahnpassagierwagons endet, kontinuierlich.

7. Roboter nach Anspruch 4, gekennzeichnet durch

Hindernissensoreinrichtungen (13) zum Erfassen einer Gegenwart eines Hindernisses vor dem Roboter; und

Wagontypdetektoreinrichtungen (40) zum Beurteilen eines Wagontyps des Eisenbahnpassagierwagons gemäß den mittels der Entfernungsmessungssensoreinrichtungen (14) gemessenen Entfernungen, der Gegenwart des mittels der Näherungssensoreinrichtungen (15) erfaßten Sitzabschnittes, und der Gegenwart des mittels der Hindernissensoreinrichtungen (13) erfaßten Hindernisses;

worin die Laufsteuereinrichtung (41) die Antriebseinrichtungen (4, 21) so steuert, daß das kontinuierliche Laufmuster gemäß dem mittels der Wagontypdetektoreinrichtungen (40) beurteilten Wagontyp geändert wird.

8. Roboter nach Anspruch 4, dadurch gekennzeichnet, daß der Boden des Eisenbahnpassagierwagons in eine Vielzahl von Blöcke unterteilt ist, und die Laufsteuereinrichtung (41) die Antriebseinrichtung (4, 21) hinsichtlich des kontinuierlichen Laufmusters steuert, das innerhalb eines jeden Blockes separat spezifiziert ist.

9. Roboter nach Anspruch 4, dadurch gekennzeichnet, daß die Laufsteuereinrichtung (41) einschließt:

Positionsabweichungs-Bestimmungseinrichtungen (41a, 41b, 41c) zum Bestimmen einer Abweichung einer gegenwärtigen Position des Roboters von einer gewünschten Position auf dem kontinuierlichen Laufmuster; und

Lenkkorrekturfaktor-Berechnungseinrichtungen (41d, 41e, 41f) zum Berechnen eines Lenkkorrekturfaktors gemäß einer Größe der mittels der Positionsabweichungs-Bestimmungseinrichtungen (41a, 41b, 41c) bestimmten Abweichung, und Liefern des berechneten Lenkkorrekturfaktors an die Antriebseinrichtungen (4, 21), so daß die Antriebseinrichtung (4, 21) eine Lenkkorrektur entsprechend dem von der Lenkkorrekturfaktor-Berechnungseinrichtung (41d, 41e, 41f) gelieferten Lenkkorrekturfaktor ausführt.

10. Roboter nach Anspruch 9, dadurch gekennzeichnet, daß die Größe der Abweichung in eine Vielzahl von Klassen einschließlich einer sehr großen Abweichungsklasse, für welche der Lenkkorrekturfaktor auf einem vorgeschriebenen konstanten Wert gesetzt wird, und einer sehr kleinen Abweichungsklasse, für welche der Lenkkorrekturfaktor auf Null gesetzt wird, klassifiziert ist.

11. Roboter nach Anspruch 9, dadurch gekennzeichnet, daß die Größe der Abweichung in eine Vielzahl von Klassen einschließlich einer relativ großen Abweichungsklasse, für welche der Lenkkorrekturfaktor berechnet wird, scharf proportional zur Größe der Abweichung zu sein, und einer relativ kleinen Abweichungsklasse, für welche der Lenkkorrekturfaktor berechnet wird, moderat proportional zur Größe der Abweichung zu sein, klassifiziert ist.

12. Roboter nach Anspruch 9, dadurch gekennzeichnet, daß die Positionsabweichungs-Bestimmungseinrichtung (41a, 41b, 41c) die Abweichung gemäß Laufentfernungen von linken und rechten Antriebsrädern (4$\ell$, 4r) der Antriebseinrichtung (4, 21) bestimmt.

13. Roboter nach Anspruch 9, dadurch gekennzeichnet, daß die Positionsabweichungs-Bestimmungseinrichtung (41a, 41b, 41c) die Abweichung gemäß den mittels der Entfernungsmessungs-Sensoreinrichtungen (14) gemessenen Entfernungen bestimmt.

14. Roboter nach Anspruch 4, gekennzeichnet durch

Kabelwickeleinrichtungen (710) zum Wickeln eines Stromversorgungskabels (5) zum Liefern von Betriebsspannung an den Roboter;

Kabelzugspannungs-Erfassungseinrichtungen (73, 74, 75) zum Erfassen einer Zugspannung auf dem Stromversorgungskabel (5); und

Wickelsteuereinrichtungen (25) zum Steuern einer Richtung und einer Größe des Wickelns des Stromversorgungskabels (5) mittels der Kabelwickeleinrichtungen (710) gemäß der mittels der Kabelzugspannungs-Erfassungseinrichtungen (73, 74, 75) erfaßten Zugspannung.

15. Roboter nach Anspruch 14, dadurch gekennzeichnet, daß die Kabelzugspannungs-Erfassungseinrichtung einen Zugspannungsarmmechanismus (73, 74) einschließt, der als Reaktion auf die Zugspannung des Stromversorgungskabels (5) beweglich ist, und ein Potentiometer (75) zum Erfassen einer Bewegung des Zugspannungsarmmechanismus (73, 74) als die Zugspannung auf dem Stromversorgungskabel (5).

16. Roboter nach Anspruch 14, dadurch gekennzeichnet, daß die Wickelsteuereinrichtung (25) die Richtung und die Größe des Wickelns des Stromversorgungskabels (5) mittels der Kabelwickeleinrichtung (710) steuert, um die mittels der Kabelzugspannungs-Erfassungseinrichtungen (73, 74, 75) erfaßte Zugspannung auf einen vorgeschriebenen konstanten Wert abzugleichen.

17. Roboter nach Anspruch 14, gekennzeichnet durch

Geschwindigkeitsdifferenz-Erfassungseinrichtungen (81, 82) zum Erfassen einer Geschwindigkeitsdifferenz zwischen Laufgeschwindigkeiten eines linken Antriebsrades (4ℓ) und eines rechten Antriebsrades (4r) in der Antriebseinrichtung (4, 21); und

Wunschzugspannungs-Berechnungseinrichtungen (83) zum Berechnen einer gewünschten Zugspannung gemäß der mittels der Geschwindigkeitsdifferenz-Erfassungseinrichtungen (81, 82) erfaßten Geschwindigkeitsdifferenz; worin die Wickelsteuereinrichtung (25) die Richtung und die Größe des Wickelns des Stromversorgungskabels (5) mittels der Kabelwickeleinrichtung (710) steuert, die mittels der Kabelzugspannungs-Erfassungseinrichtungen (73, 74, 75) erfaßte Zugspannung auf die mittels der Wunschzugspannungs-Berechnungseinrichtungen (83) berechnete, gewünschte Zugspannung abzugleichen.

18. Roboter nach Anspruch 17, dadurch gekennzeichnet, daß die Wunschzugspannungs-Berechnungseinrichtung (83) die gewünschte Zugspannung berechnet, proportional zur mittels der Geschwindigkeitsdifferenz-Erfassungseinrichtungen (81, 82) erfaßten Geschwindigkeitsdifferenz zu sein.

19. Roboter nach Anspruch 17, dadurch gekennzeichnet, daß die Wunschzugspannungs-Berechnungseinrichtung (83) die gewünschte Zugspannung berechnet, ein konstanter Maximalwert zu sein, wenn die mittels der Geschwindigkeitsdifferenz-Erfassungseinrichtungen (81, 82) erfaßte Geschwindigkeitsdifferenz größer ist als eine vorgeschriebene obere Schwelle, und ein konstanter Minimalwert zu sein, wenn die mittels der Geschwindigkeitsdifferenz-Erfassungseinrichtungen (81, 82) erfaßte Geschwindigkeitsdifferenz kleiner ist als eine vorgeschriebene untere Schwelle.

20. Roboter nach Anspruch 17, dadurch gekennzeichnet, daß die Kabelwickeleinrichtung (710) frei drehbar in einer horizontalen Ebene ist, so daß das um die Kabelwickeleinrichtung (710) gewickelte Stromversorgungskabel (5) in beliebiger Richtung auf der horizontalen Ebene bezüglich des Roboters ausgezogen werden kann.

## Revendications

1. Robot de nettoyage pour wagon à voyageurs de chemins de fer, comprenant :

un moyen d'entraînement (4, 21) pour exécuter une opération de marche sur un plancher;
un moyen de commande de marche (41) pour commander le moyen d'entraînement (4, 21) afin de réaliser l'opération de marche suivant un diagramme de marche continu; et
un moyen de nettoyage (2, 29) pour exécuter une opération de nettoyage par lavage sur le plancher;

caractérisé en ce qu'il comprend en outre :

un moyen de recueil d'eau sale (3, 8, 29) pour recueillir l'eau sale provenant de l'opération de nettoyage par lavage exécutée par le moyen de nettoyage (2, 29);
un moyen de détecteur pour analyse d'eau (36) afin de détecter un taux de transmission de la lumière à travers l'eau sale recueillie par le moyen de recueil d'eau sale (3, 8, 29); et
un moyen de commande de nettoyage (43) pour commander l'opération de nettoyage par lavage exécutée par le moyen de nettoyage (2, 29) conformément au taux de transmission de la lumière détecté par le moyen de détecteur pour analyse de l'eau (36).

2. Robot selon la revendication 1, dans lequel le moyen de commande de marche (41) commande le moyen d'entraînement (4, 21) pour qu'il recule sur une distance prescrite suivant le diagramme de marche continu lorsque le taux de transmission de la lumière détectée par le moyen de détecteur pour analyse de l'eau (36) est inférieur à un niveau de seuil donné.

3. Robot selon la revendication 2, dans lequel, après que le moyen d'entraînement (4, 21) est commandé pour reculer sur la distance prescrite, le moyen de commande de nettoyage (43) commande la vitesse de l'opération de commande du lavage exécuté par le moyen de nettoyage (2, 29) pour qu'elle soit inférieure pour une valeur faible du taux de transmission de la lumière détectée par le moyen de détecteur pour analyse de l'eau (36).

**4.** Robot selon la revendication 1, comprenant en outre :

un moyen de détecteur de mesure de distance (14) pour mesurer les distances du robot par rapport à l'une quelconque d'une partie à siège, d'une partie à porte, et d'une paroi du wagon à voyageurs de chemins de fer, à l'avant et sur un côté du robot; et
un moyen de détecteur de proximité (15) pour détecter la présence de la partie à siège du wagon à voyageurs de chemins de fer sur ledit côté du robot;
dans lequel le moyen de commande de marche (41) commande le moyen d'entraînement (4, 21) conformément aux distances mesurées par le moyen de détecteur de mesure de distance (14) et à la présence de la partie à siège détectée par le moyen de détecteur de proximité (15).

**5.** Robot selon la revendication 4, dans lequel le moyen de commande de marche (41) commande le moyen d'entraînement (4, 21) de manière à réaliser l'opération de marche suivant le diagramme de marche continu, progressant à partir d'une partie circonférentielle du plancher le long des parties à siège, des parties à porte, et des parois du wagon à voyageurs de chemins de fer, jusqu'à une partie centrale du plancher du wagon à voyageurs de chemins de fer, d'une façon continue.

**6.** Robot selon la revendication 4, dans lequel le moyen de commande de marche (41) commande le moyen d'entraînement (4, 21) pour réaliser l'opération de marche suivant le diagramme de marche continu, commençant à une partie extrême du plancher du wagon à voyageurs de chemins de fer et se terminant à l'autre partie extrême du wagon à voyageurs de chemins de fer, d'une façon continue.

**7.** Robot selon la revendication 4, comprenant en outre :

un moyen de détecteur d'obstacles (13) pour détecter la présence d'un obstacle à l'avant du robot; et
un moyen de détecteur de type de wagon (40) pour porter un jugement sur le type du wagon à voyageurs de chemins de fer conformément aux distances mesurées par le moyen de détecteur de mesure de distance (14), à la présence de la partie à siège détectée par le moyen de détecteur de proximité (15), et à la présence de l'obstacle détecté par le moyen de détecteur d'obstacles (13);
dans lequel le moyen de commande de marche (41) commande le moyen d'entraînement (4, 21) de façon que le diagramme de marche continu soit changé conformément au type de wagon qui a fait l'objet d'un jugement par le moyen de détecteur de type de wagon (40).

**8.** Robot selon la revendication 4, dans lequel le plancher du wagon à voyageurs de chemins de fer est divisé en une multitude de blocs, et le moyen de commande de marche (41) commande le moyen d'entraînement (4, 21) en termes du diagramme de marche continu spécifié à l'intérieur de chaque bloc, de façon séparée.

**9.** Robot selon la revendication 4, dans lequel le moyen de commande de marche (41) comprend :

un moyen de détermination d'écart de position (41a, 41b, 41c) pour déterminer l'écart d'une position courante du robot par rapport à une position désirée sur le diagramme de marche continu et
un moyen de calcul de facteur de correction de direction (41d, 41e, 41f) pour calculer un facteur de correction de direction conformément à la valeur de l'écart déterminé par le moyen de détermination d'écart de position (41a, 41b, 41c) et fournir le facteur calculé de correction de la direction au moyen d'entraînement (4, 21) de façon que le moyen d'entraînement (4, 21) exécute une correction de la direction correspondant au facteur de correction de la direction fourni par le moyen de calcul du facteur de correction de la direction (41d, 41e, 41f).

**10.** Robot selon la revendication 9, dans lequel la valeur de l'écart est classée en une multitude de classes comprenant une classe d'écarts excessivement grands pour laquelle le facteur de correction de la direction est établi à une valeur constante donnée, et une classe d'écarts excessivement petits pour laquelle le facteur de correction de la direction est établi à une valeur nulle.

**11.** Robot selon la revendication 9, dans lequel la valeur de l'écart est classée en une multitude de classes comprenant une classe d'écarts relativement grands pour laquelle le facteur de correction de la direction est calculé pour être nettement proportionnel à la valeur de l'écart, et une classe d'écarts relativement petits pour laquelle le facteur de correction de la direction est calculé pour être modérément proportionnel à la valeur de l'écart.

**12.** Robot selon la revendication 9, dans lequel le moyen de détermination d'écart de position (41a, 41b, 41c) détermine l'écart conformément aux distances de marche des roues motrices gauche et droite ($4\ell$, 4r) du moyen

d'entraînement (4, 21).

**13.** Robot selon la revendication 9, dans lequel le moyen de détermination d'écart de position (41a, 41b, 41c) détermine l'écart conformément aux distances mesurées par le moyen de détecteur de mesure de distance (14).

**14.** Robot selon la revendication 4, comprenant en outre :

un moyen d'enroulement de câble (710) pour enrouler un câble d'alimentation (5) pour fournir l'énergie de fonctionnement au robot;
un moyen de détection de tension de câble (73, 74, 75) pour détecter la tension du câble d'alimentation (5); et
un moyen de commande d'enroulement (25) pour commander la direction et la quantité de l'enrouement du câble d'alimentation (5) par le moyen d'enroulement de câble (710) selon la tension détectée par le moyen de détection de tension de câble (73, 74, 75).

**15.** Robot selon la revendication 14, dans lequel le moyen de détection de tension de câble comprend un mécanisme à bras de traction (73, 74) mobile en réponse à la traction exercée sur le câble d'alimentation (5) et un potentiomètre (75) pour détecter le mouvement du mécanisme à bras de traction (73, 74) comme tension agissant sur le câble d'alimentation (5).

**16.** Robot selon la revendication 14, dans lequel le moyen de commande d'enroulement (25) commande le sens et la quantité de l'enroulement du câble d'alimentation (5) par le moyen d'enroulement de câble (710) afin d'ajuster la tension détectée par le moyen de détection de tension de câble (73, 74, 75) à une valeur donnée constante.

**17.** Robot selon la revendication 14, comprenant en outre :

un moyen de détection de différence de vitesses (81, 82) pour détecter la différence de vitesses entre les vitesses de marche de la roue motrice gauche (4$\ell$) et de la roue motrice droite (4r) dans le moyen d'entraînement (4, 21); et
un moyen de calcul de tension désirée (83) pour calculer la tension désirée selon la différence de vitesses détectée par le moyen de détection de différence de vitesses (81, 82);
et dans lequel le moyen de commande d'enroulement (25) commande le sens et la quantité de l'enroulement du câble d'alimentation (5) par le moyen d'enroulement de câble (710) afin d'ajuster la tension détectée par le moyen de détection de tension de câble (73, 74, 75) à la tension désirée calculée par le moyen de calcul de tension désirée (83).

**18.** Robot selon la revendication 17, dans lequel le moyen de calcul de tension désirée calcule la tension désirée pour qu'elle soit proportionnelle à la différence de vitesses détectée par le moyen de détection de différence de vitesses (81, 82).

**19.** Robot selon la revendication 17, dans lequel le moyen de calcul de tension désirée (83) calcule la tension désirée pour qu'elle soit égale à une valeur maximum constante lorsque la différence de vitesses détectée par le moyen de détection de différence de vitesses (81, 82) est supérieure à un seuil supérieur donné et pour qu'elle soit égale à une valeur minimum constante lorsque la différence de vitesses détectée par le moyen de détection de différence de vitesses (81, 82) est inférieure à un seuil inférieur donné.

**20.** Robot selon la revendication 17, dans lequel le moyen d'enroulement de câble (710) peut tourner librement sur un plan horizontal de façon que le câble d'alimentation (5) enroulé autour du moyen d'enroulement de câble (710) puisse s'étendre dans une direction arbitraire sur le plan horizontal par rapport au robot.

FIG.1A

FIG.1B

FIG.2

# FIG.3

# FIG.4

# FIG.5

# FIG.6

# FIG.7

# FIG.8

DRIVER'S
ROOM

64

# FIG.9

57

# FIG.10

```
                          ┌─────────┐
                          │  START  │
                          └─────────┘
                               │
        ┌──────────────────────┼───────────────────────────────┐
        │                      ▼                                │
        │           ┌─────────────────────┐                     │
        │           │ RUNNING STRAIGHT    │── S1                │
        │           │ ( SEAT PORTION )    │                     │
        │           └─────────────────────┘                     │
        │                      │                                │
        │                      ▼          S2                     │
        │                   ╱WALL╲            YES                │
        │                 ╱DETECTED IN╲────────────────┐        │
        │                 ╲  FRONT ?  ╱                 │        │
        │                   ╲    ╱                      │        │
        │                    │NO                        │        │
        │                    ▼          S3              │        │
        │    NO         ╱  ENDING  ╲                    │        │
        ├──────────── ╱EDGE OF SEAT PORTION╲            │        │
        │             ╲   DETECTED?  ╱                  │        │
        │               ╲        ╱                      │        │
        │                 │YES          S4              │        │
   S6   │                 ▼                             │        │
 ┌──────────┐    ┌─────────────────────┐                │        │
 │DOOR BLOCK│    │ RUNNING STRAIGHT    │                │        │
 │RUNNING   │    │ ( DOOR PORTION )    │                │        │
 │PATTERN   │    └─────────────────────┘                │        │
 └──────────┘              │         S5                 │        │
      ▲         YES        ▼                            │        │
      └────────────── ╱ STARTING ╲                      │        │
                     ╱EDGE OF SEAT PORTION╲             │        │
                     ╲   DETECTED ?  ╱                  │        │
                       ╲        ╱                       │        │
                         │NO         S8                 │        │
                         ▼                      NO      │        │
                      ╱WALL╲                            │        │
                    ╱DETECTED IN╲──────────┐            │        │
                    ╲  FRONT ?  ╱          │            │        │
                      ╲    ╱               │            │        │
                       │YES    S9          │   S7       │        │
                       ▼                   │            │        │
              ┌─────────────────┐   ┌─────────────────┐ │        │
              │ FIRST ROUND     │   │ FIRST ROUND     │ │        │
              │ U-TURN BLOCK    │   │ U-TURN BLOCK    │ │        │
              │ RUNNING PATTERN │   │ RUNNING         │ │        │
              │ FOR FRONT END   │   │ PATTERN FOR     │ │        │
              │ PASSENGER CAR   │   │ MIDDLE          │ │        │
              └─────────────────┘   │ PASSENGER       │ │        │
                       │            │ CAR             │ │        │
                       │            └─────────────────┘ │        │
                       └──────────────────┴─────────────┘        │
                                          └──────────────────────┘
```

# FIG.11

# FIG.12A

# FIG.12B

# FIG.13

# FIG.14

# FIG.15

ROTATIONAL SPEED
FOR RIGHT WHEEL

ROTATIONAL SPEED
FOR LEFT WHEEL

RUNNING DISTANCE
CALCULATION UNIT — 41a

41

CURRENT POSITION
CALCULATION UNIT — 41b

DISTANCE
MEASUREMENT
DATA

DEVIATION
CORRECTION UNIT — 41c

STEERING CORRECTION
FACTOR CALCULATION
UNIT — 41d

STEERING CORRECTION
FACTOR
CHARACTERISTIC
MEMORY UNIT — 41e

RUNNING SPEED
COMMAND
CALCULATION UNIT — 41f

RUNNING SPEED COMMAND
FOR RIGHT DRIVING WHEEL

RUNNING SPEED COMMAND
FOR LEFT DRIVING WHEEL

# FIG.16

# FIG.17

35

# FIG.18

START

**S11** CALCULATE RUNNING DISTANCE FOR RIGHT DRIVING WHEEL

**S12** CALCULATE RUNNING DISTANCE FOR LEFT DRIVING WHEEL

**S13** CALCULATE CURRENT POSITION ( X,Y )

**S14** DISTANCE MEASUREMENT DATA AVAILABLE ? — NO

YES

**S15** ENTER DISTANCE MEASUREMENT DATA

**S16** CORRECT DEVIATION Y BY DISTANCE MEASUREMENT DATA

$Y < -\Delta D3?$ **S17** — NO

YES

$S = -C3$ **S18**

$Y > \Delta D3?$ **S19** — NO

YES

$S = C3$ **S20**

$Y < -\Delta D1?$ **S21** — YES

NO

$Y < -\Delta D2?$ **S22** — YES

NO

$S = \dfrac{C2}{\Delta D2 - \Delta D1}(Y + \Delta D1)$ **S23**

$S = -SPD \times (1 - Y/\Delta D2)$ **S24**

RETURN

$Y > \Delta D1?$ **S25** — YES

NO

$Y > \Delta D2?$ **S26** — YES

NO

$S = \dfrac{C2}{\Delta D2 - \Delta D1}(Y - \Delta D1)$ **S27**

$S = 0$ **S29**

$S = SPD \times (1 + Y/\Delta D2)$ **S28**

RETURN

36

# FIG.19

FIG.20A

FIG.20B

FIG.20C

# FIG.21

75 — POTENTIOMETER

25

28 — ENC

27 — DCM

26 — CABLE REWINDING DRIVER

79 +/−

77 +/−

76 +/−

78 — A/D

42

RUNNING SPEED
CABLE LENGTH
CORNER / STRAIGHT
RUNNING POSITION
RUNNING DIRECTION

SPECIFIED TENSION COMMAND

ROTATIONAL SPEED

TENSION

OFFSET

# FIG.22

```
                    ( START )
                        │
                        ▼
              ┌───────────────────┐
              │ SET SPECIFIED     │
              │ TENSION           │── S31
              └───────────────────┘
                        │                        ( a )
                        ▼
              ┌───────────────────┐
              │ DETECT CABLE      │
              │ TENSION           │── S32
              └───────────────────┘
                        │
                        ◆
                   DETECTED
              TENSION EQUAL          YES
               TO SPECIFIED   ──────────────┐
                 TENSION                    │
                    ?        S33            │
                   NO                       │
                    ◆                       │
              DETECTED                      │
    YES  TENSION GREATER THAN               │
        SPECIFIED TENSION                   │
              ?          S35                │
                   NO                       │
```

┌──────────────┐   ┌──────────────────┐   ┌──────────────┐
│ ROTATION     │   │ ROTATION COMMAND │   │ STOP         │
│ COMMAND FOR  │   │ FOR REWINDING    │   │ COMMAND      │
│ ROLLING OUT  │   │ DIRECTION        │   │              │
│ DIRECTION    │   │                  │   │              │
└──────────────┘   └──────────────────┘   └──────────────┘
      S37                   S36                  S34

```
                        ▼
              ┌───────────────────┐
              │ CONTROL DC        │
              │ MOTOR             │── S38
              └───────────────────┘
                        │
                        ▼
              ┌───────────────────┐
              │ ROTATE            │
              │ TAKE-UP REEL      │── S39
              └───────────────────┘
                        │
                        ◆
                  OPERATION         NO
              END COMMAND ──────────────( a )
                    ?        S40
                  YES
                    ▼
                ( END )
```

# FIG.23A

POWER SOURCE

5

711

6

710

# FIG.23B

POWER SOURCE

5

711

710

6

# FIG.24

# FIG.25

TENSION COMMAND CALCULATION UNIT — 83

SPEED INPUT UNIT — 81

SPEED DIFFERENCE CALCULATION UNIT — 82

D ≤ MIN → T = T1

D ≥ MAX → T = T2

MIN < D < MAX → T = D × COEFF

APPROPRIATE TENSION COMMAND OUTPUT

77

SPEED COMMAND CALCULATION UNIT — 86

CABLE REWINDING DRIVER — 26

DCM — 27

A/D CONVERTER — 78

POTENTIOMETER — 75

EP 0 569 984 B1